(19) Europäisches Patentamt
European Patent Office
Office européen des brevets

(11) EP 1 084 203 B1

(12) # FASCICULE DE BREVET EUROPEEN

(45) Date de publication et mention de la délivrance du brevet:
**29.06.2011 Bulletin 2011/26**

(21) Numéro de dépôt: **99919483.0**

(22) Date de dépôt: **06.04.1999**

(51) Int Cl.:
***C09D 17/00*** *(2006.01)* ***C09C 1/00*** *(2006.01)*
***D21H 19/38*** *(2006.01)* ***D21H 19/58*** *(2006.01)*

(86) Numéro de dépôt international:
**PCT/IB1999/000941**

(87) Numéro de publication internationale:
**WO 1999/052984 (21.10.1999 Gazette 1999/42)**

(54) **COMPOSITIONS COMPOSITES DE CHARGES OU PIGMENTS MINERAUX OU ORGANIQUES CO-STRUCTURES OU CO-ADSORBES ET LEURS UTILISATIONS**

VERBUNDMATERIALIEN AUF BASIS VON GEMEINSAMSTRUKTURIERTEN ODER ADSORBIERTEN FÜLLSTOFFEN ODER PIGMENTE AUFGEBAUT, UND IHRE VERWENDUNGEN

COMPOSITE COMPOSITIONS OF CO-STRUCTURED OR CO-ADSORBED ORGANIC OR MINERAL PIGMENTS OR FILLERS AND THEIR USES

(84) Etats contractants désignés:
**AT BE CH DE DK ES FI FR GB GR IE IT LI LU MC NL PT SE**

(30) Priorité: **09.04.1998 FR 9804714**
**30.11.1998 FR 9815244**

(43) Date de publication de la demande:
**21.03.2001 Bulletin 2001/12**

(73) Titulaire: **OMYA DEVELOPMENT AG**
**4665 Oftringen (CH)**

(72) Inventeurs:
- **GANE, Patrick, A., C.**
**CH-4852 Rothrist (CH)**
- **BURI, Matthias**
**CH-4852 Rothrist (CH)**

(74) Mandataire: **Richebourg, Michel François**
**Cabinet Michel Richebourg**
**"Le Clos du Golf"**
**69 Rue Saint-Simon**
**42000 Saint Etienne (FR)**

(56) Documents cités:
**EP-A- 0 332 102**
**EP-A- 0 507 362**
**DE-C- 4 312 463**
**FR-A- 2 413 448**
**FR-A- 2 526 061**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 084 203 B1

## Description

La présente invention concerne le domaine des compositions composites de charges ou pigments minéraux ou organiques contenant au moins deux charges ou pigments minéraux ou organiques de nature différente ainsi que leurs utilisations dans le domaine papetier pour la fabrication du papier, la masse ou le couchage ou encore tout autre traitement de surface du papier ainsi que dans les domaines des peintures aqueuses ou non aqueuses ainsi que des matières plastiques.

Les pigments ou charges composites sont couramment employés de nos jours pour tout type de fabrication du papier, la masse, le couchage ou tout autre traitement de surface du papier pour améliorer la qualité du papier telle que par exemple les propriétés d'opacité, de blancheur, de brillance des feuilles de papier ou encore des caractéristiques d'imprimabilité.

Une technique couramment utilisée pour l'obtention des pigments ou charges composites consiste à mélanger une charge minérale, telle que par exemple un carbonate de calcium naturel avec une charge minérale telle que par exemple le talc (FR 2 526 061) ou bien encore une charge minérale telle que le talc avec une autre charge minérale telle que le kaolin calciné (EP 0 365 502).

Deux autres types de procédés sont également connus, dans l'art antérieur pour permettre de mettre au point des pigments ou charges composites répondant aux critères nécessaires à leur utilisation dans le domaine papetier.

Une première catégorie de ces procédés connus dans l'art antérieur est relative à la formation de réseaux entre les particules pigmentaires créant ainsi de nombreux vides internes qui sont alors la cause des améliorations des propriétés optiques des charges pigmentaires parfois mesurées par un coefficient de diffusion de la lumière S.

Ainsi le brevet WO 92/08755 décrit un procédé de formation d'agrégats par floculation et éventuellement par précipitation in situ du carbonate de calcium, cette floculation étant consécutive aux interactions ioniques obtenues par la mise en oeuvre de polymères anioniques de haut poids moléculaire pour floculer les particules minérales auxquelles sont ajoutés, à la surface du minéral, des cations multivalents tels que l'ion calcium.

De même le brevet US 5,449,402 révèle un produit obtenu par une méthode de création de vides internes basée sur des interactions ioniques ou électrostatiques tout comme l'US 5,454,864 ou encore l'US 5,344,487 ou le EP 0 573 150 qui proposent un pigment composite dont la préparation est basée sur les forces d'attraction ionique.

Ces procédés basés sur les forces d'attraction ionique sont sensibles aux forces ioniques mises en jeu dans les formulations de sauce de couchage papetière ou de charge de masse du papier et ne garantissent pas la mise en oeuvre de ces pigments dans les applications telles que le couchage ou la charge de masse du papier.

Une deuxième catégorie de ces méthodes connues dans l'art antérieur pour obtenir des pigments à caractéristique optique améliorée fait appel à l'utilisation de composés organiques du silicium (US 4,818,294 ; US 5,458,680) ou des composés à base de chlorures (US 4,820,554 ; US 4,826,536; WO 97/24406).

Enfin une dernière méthode connue pour améliorer la blancheur (WO 97/32934) consiste à revêtir les particules pigmentaires par une autre particule pigmentaire telle que de très fines particules de carbonate de calcium précipité. Mais une telle méthode n'est pas basée sur la mise en oeuvre d'un agent liant organique créant une co-structure.

Face à ce problème d'amélioration des propriétés optiques telles que par exemple l'opacité, la blancheur, la coloration ou la brillance ou bien encore d'amélioration des caractéristiques d'imprimabilité, la Demanderesse a, selon l'invention, mis au point des compositions composites, sèches ou non aqueuses ou encore aqueuses, de charges ou pigments minéraux ou organiques permettant d'améliorer au moins l'une des propriétés optiques ou d'imprimabilité requises dans les différents domaines d'applications tout en obtenant une composition macroscopiquement homogène et stable malgré les forces ioniques présentes dans les formulations bien connues telles que les sauces de couchage papetières offset ou rotogravure ou encore la charge de masse du papier.

Ainsi, un des buts de l'invention est d'obtenir des compositions composites sèches ou non aqueuses ou encore aqueuses de charges ou pigments minéraux ou organiques contenant au moins deux charges ou pigments minéraux ou organiques de nature physique ou chimique différente.

Les compositions composites de charges ou pigments minéraux ou organiques selon l'invention et ayant les qualités précitées constituant un autre but de l'invention se caractérisent en ce qu'elles contiennent :

a) au moins deux charges ou pigments minéraux ou organiques dont au moins l'une présente une surface dotée d'au moins un site hydrophile et au moins l'autre présente une surface dotée d'au moins un site organophile

b) au moins un agent liant

et en ce qu'elles sont co-structurées ou co-adsorbées c'est-à-dire en ce que les différentes particules minérales ou organiques présentent une cohésion structurelle apportée par la création d'une liaison ou d'une adhésion entre au moins deux particules à états de surface différente.

Ainsi dans toute la suite de la description, par les mots co-structure ou co-structurés ou co-adsorbés, la Demanderesse entend la création d'une liaison entre au moins deux charges ou pigments quelconques par la formation d'une structure comparable à une liaison ou une adhésion entre la surface d'une charge ou pigment présentant au moins un site hydrophile et la surface de l'autre charge ou pigment présentant au moins un site organophile à l'aide d'un agent liant qui est un composé organique. Ce liant peut être supporté par un gaz comme l'air ou tout autre gaz.

En outre, un autre but de l'invention est la mise au point de compositions composites stables permettant leur transport et leur stockage pendant plusieurs semaines.

Un autre but de l'invention est encore la mise au point d'une composition composite de structure macroscopiquement homogène, ce qui se traduit par la mise au point de sauces de couchage papetières macroscopiquement stables et contenant les compositions aqueuses composites précitées.

De plus, un autre but de l'invention est l'utilisation de ces compositions composites de charges ou de pigments minéraux ou organiques dans la fabrication du papier, la masse et/ou le couchage et/ou tout autre composition de traitement de surface du papier ainsi que dans le domaine des peintures et dans le domaine des matières plastiques.

Enfin un autre but de l'invention est la mise au point de suspensions contenant les compositions composites de l'invention ainsi que la mise au point de sauces de couchage papetières ou de compositions de traitement de surface du papier ou encore de compositions de charge de masse non couchée présentant une amélioration d'au moins une des propriétés telles que l'opacité, la blancheur, la brillance ou l'imprimabilité.

Il est à noter que l'amélioration de ces propriétés dépend du domaine d'application et que l'homme du métier saura adapter les propriétés à l'application fine recherchée.

Ces buts sont atteints grâce à la mise en contact de la surface d'un des pigments ou charges avec la surface de l'autre des pigments ou charges en présence d'un agent liant de manière à ce que cette mise en contact crée la formation d'une structure, entre au moins deux particules minérales ou organiques de nature physique ou chimique différente, c'est-à-dire crée la formation d'une structure entre elles, au moins l'une d'entre elles présentant une surface dotée d'au moins un site hydrophile et au moins l'une d'entre elles présentant une surface munie d'au moins un site organophile.

Par particule minérale ou organique présentant une surface dotée d'au moins un site hydrophile, la Demanderesse entend une particule minérale ou organique partiellement ou totalement mouillable par des substances polaires sans l'influence d'un quelconque composé externe et plus particulièrement partiellement ou totalement mouillable par de l'eau.

Les particules minérales ou organiques présentant une surface dotée d'au moins un site hydrophile peuvent être de natures physiques ou chimiques très diverses telles que le carbonate de calcium naturel comme par exemple la craie, la calcite, le marbre ou toute autre forme de carbonate de calcium naturel pouvant notamment provenir de procédé de recyclage, le carbonate de calcium précipité, les dolomies, les hydroxydes d'aluminium cristallins ou amorphes, les silicates précipités naturels ou synthétiques, le sulfate de calcium, le dioxyde de titane, le blanc satin, les wollastonites, la huntite, les argiles calcinées par exemple provenant de recyclage, l'amidon, ou encore tout type de particules minérales ou organiques organophiles ayant subi un traitement physique tel que par exemple Corona ou chimique de manière à présenter au moins un site hydrophile.

Par particule minérale ou organique présentant une surface dotée d'au moins un site organophile, la Demanderesse entend une particule minérale ou organique partiellement ou totalement mouillable par un fluide organique ou une substance organique, cette mouillabilité étant distincte des mécanismes d'adsorption tels que l'attraction électrostatique ou la complexation.

Par particule minérale ou organique présentant une surface munie d'au moins un site organophile, la Demanderesse entend une particule minérale ou organique de natures physiques ou chimiques très diverses telles que les talcs, les micas, les kaolins calcinés ou non, ou encore l'oxyde de zinc ou les pigments de fer transparents ou encore les pigments colorants comme le bleu de phtalocyanine, les pigments synthétiques à base de polystyrène, les résines urée-formol, le noir de carbone, les fibres et farines de cellulose ou encore tout type de particules minérales ou organiques hydrophiles mais qui, après un traitement chimique ou physique présente au moins un site organophile c'est-à-dire est mouillable par un fluide organique ou une substance organique.

Il est à noter que les quantités et rapports pondéraux secs des divers charges ou pigments constitutifs des compositions composites selon l'invention varient de 0,1 % à 99,9 % en fonction de la nature des divers pigments ou charges et préférentiellement varient de 25 % à 95 % en poids sec, par rapport au poids sec total des charges ou pigments, pour les charges ou pigments minéraux ou organiques présentant une surface dotée d'au moins un site hydrophile et varient préférentiellement entre 75 % et 5 % en poids sec, par rapport au poids sec total des charges ou pigments, pour les charges ou pigments minéraux ou organiques présentant une surface dotée d'au moins un site organophile.

Cette création d'une liaison ou d'une co-structure est mise en évidence par le comportement rhéologique des compositions composites ainsi que par les propriétés d'homogénéité des sauces de couchage papetières, ou d'imprimabilité du papier.

Elle se traduit également par une opacité accrue des feuilles de papier sans bois chargées à 75,5 $g/m^2$ avec

les compositions composites de l'invention. Cette opacité est mesurée selon la norme DIN 53146 et la mise en oeuvre d'un spectrophotomètre Elrepho 2000 de Datacolor AG (Suisse).

Ainsi les compositions composites de charges ou pigments minéraux ou organiques selon l'invention se caractérisent en ce qu'elles sont co-structurées ou co-adsorbées c'est-à-dire en ce qu'elles possèdent une limite d'écoulement, déterminée par la mesure du viscoélasticimètre Stress Tech®, élevée à savoir supérieure et préférentiellement au moins quatre fois supérieure à celle du simple mélange de charges ou pigments correspondants.

Les compositions composites de charges ou pigments minéraux ou organiques selon l'invention se caractérisent aussi en ce que les différentes particules minérales ou organiques présentent une cohésion que reflète l'homogénéité macroscopique de la suspension de la composition composite et/ou de la sauce de couchage comprenant la composition composite. Cette homogénéité macroscopique s'exprime par la mesure de la teneur d'un des pigments ou charges en deux endroits bien distincts de la suspension ou de la sauce de couchage après plusieurs heures ou plusieurs jours de repos.

En outre, les compositions composites de charges ou pigments minéraux ou organiques selon l'invention se caractérisent en ce qu'elles contiennent au moins un agent liant. Cet agent liant est un composé organique, pouvant être supporté par un gaz comme l'air ou tout autre gaz. Cet agent liant, composé organique doit être partiellement ou totalement mouillé par les surfaces des pigments ou charges destinés à être mis en contact. De manière préférentielle, cet agent liant est choisi parmi les polymères et/ou copolymères acryliques ou vinyliques ou encore polycondensats ou produits de polyaddition tels que par exemple les polymères ou copolymères, dans leur état totalement acide ou partiellement neutralisé ou totalement neutralisé par des agents de neutralisation contenant des cations monovalents ou polyvalents ou leurs mélanges, de l'un au moins des monomères tels que l'acide acrylique et/ou méthacrylique, itaconique, crotonique, fumarique, anhydride maléique ou encore, isocrotonique, aconitique, mésaconique, sinapique, undécylénique, angélique et/ou leurs esters respectifs, l'acide acrylamido méthyl propane sulfonique, l'acroléine, l'acrylamide et/ou méthacrylamide, le méthacrylamido propyl triméthyl ammonium chlorure ou sulfate, le méthacrylate de triméthyl ammonium éthyl chlorure ou sulfate, ainsi que leurs homologues en acrylate et en acrylamide quaternisés ou non et/ou le diméthyldiallylchlorure, la vinylpyrrolidone ou bien encore un agent liant choisi parmi les acides gras linéaires ou ramifiés, ou les alcools gras linéaires ou ramifiés, ou encore les amines grasses linéaires ou ramifiées ou cycliques, saturés ou non ou bien encore choisi parmi les sels quaternaires préférentiellement à chaînes grasses linéaires ou ramifiées d'origine végétale ou non.

Cet agent liant peut encore être choisi parmi l'un au moins des monomères précités ou leurs mélanges sous la forme du ou des monomères eux-mêmes polymérisés en présence d'au moins une des particules minérales ou organiques.

En outre, il est à noter que l'optimisation du poids moléculaire de l'agent liant dépend de sa nature chimique.

Selon l'invention, l'agent liant est présent dans la composition composite à raison de 0,01 % à 10 % préférentiellement de 0,10 % à 1,5 % en poids sec par rapport au poids sec total des charges ou pigments.

Les compositions composites selon l'invention peuvent éventuellement être dispersées dans l'eau, dans des mélanges eau-solvants ou dans d'autres solvants à l'aide d'un ou plusieurs agents dispersants bien connus de l'homme de l'art, entre autre ceux décrits dans les brevets EP 0 100 947, EP 0 542 643 ou EP 0 542 644.

Il est également important de noter que les compositions composites co-structurées selon l'invention sont compatibles avec d'autres compositions aqueuses de charges minérales ou organiques, c'est-à-dire qu'elles forment un mélange stable et homogène lorsqu'elles sont simplement mélangées à ces autres suspensions, alors qu'il y a impossibilité d'obtenir une suspension homogène s'il n'est pas mis en oeuvre une composition composite co-structurée selon l'invention.

Les sauces de couchage papetière et/ou les compositions de traitement de surface du papier, du bois, du métal, du plastique ou du ciment et/ou les compositions de peinture aqueuse ou non aqueuse selon l'invention sont préparées de manière connue par l'homme du métier par mélange dans l'eau des compositions composites sèches ou non aqueuses ou aqueuses de charges ou pigments minéraux ou organiques selon l'invention et d'un ou plusieurs liants d'origine naturelle ou synthétique tels que par exemple l'amidon, la carboxyméthylcellulose, les alcools polyvinyliques ou encore des latex ou dispersions polymères du type styrène-butadiène ou styrène-acrylate ou encore des dispersions polymères acryliques ou vinyliques ou autres.

Les sauces de couchage papetière et/ou les compositions de traitement de surface du papier, du bois, du métal, du plastique ou du ciment et/ou les formulations de peinture aqueuse ou non aqueuse peuvent également contenir de manière connue des additifs usuels tels que des modificateurs de rhéologie, des charges organiques, des agents anti-mousse, des azurants optiques, des agents biocides, des lubrifiants, des hydroxydes alcalins, des colorants et autres.

De plus, les suspensions aqueuses contenant les compositions composites, les sauces de couchage papetière et/ou les compositions de traitement de surface du papier, du bois, du métal, du plastique ou du ciment et/ou les formulations de peinture aqueuse ou non aqueuse ou encore les compositions de charge de masse non couchée selon l'invention se caractérisent en ce qu'elles contiennent les compositions composites sèches ou non aqueuses ou aqueuses selon l'invention.

Les suspensions aqueuses contenant les compositions composites, les sauces de couchage papetière et/ou les compositions de traitement de surface du papier, du bois, du métal, du plastique ou du ciment et/ou les formulations de peinture aqueuse ou non aqueuse selon l'invention se caractérisent aussi en ce qu'elles sont macroscopiquement homogènes.

Cette homogénéité macroscopique se détermine par la mesure de la quantité de l'une des charges en surface et au fond du flacon contenant la sauce de couchage diluée à 40 % ou 20 % en matière sèche.

La comparaison de cette quantité de l'une des charges en ces deux points « haut » et « bas » de la composition selon l'invention avec la quantité de l'une des charges en ces deux points « haut » et « bas » du simple mélange permet alors d'apprécier qu'il n'y a presque pas de migration de l'une des charges dans une partie préférentielle de la composition selon l'invention à l'inverse de ce qui se passe pour un simple mélange.

Cette homogénéité macroscopique des compositions composites selon l'invention se traduit par une meilleure homogénéité dans la feuille de papier en raison d'une rétention et d'une distribution plus homogène.

En outre les suspensions aqueuses contenant les compositions composites selon l'invention, les sauces de couchage papetières selon l'invention et/ou les compositions de traitement de surface du papier, selon l'invention se caractérisent en ce qu'elles possèdent une limite d'écoulement, déterminée par la mesure du viscoélasticimètre Stress Tech®, élevée à savoir supérieure et préférentiellement au moins quatre fois supérieure à celle de l'art antérieur.

De plus les suspensions aqueuses selon l'invention ou les sauces de couchage selon l'invention ou les compositions de traitement de surface du papier selon l'invention ou encore les compositions de charge de masse non couchée selon l'invention présentent éventuellement au moins une des propriétés optiques telles que l'opacité ou la blancheur ou la brillance ou des propriétés d'imprimabilité ou de densité d'impression améliorées.

De même, les formulations de peinture aqueuse ou non aqueuse contenant les compositions composites selon l'invention présentent l'avantage d'une opacité accrue.

Ainsi, de manière préférentielle, les suspensions aqueuses contenant les compositions composites de l'invention ou les sauces de couchage selon l'invention ou les compositions de traitement de surface du papier, du bois, du métal, du plastique ou du ciment et/ou les formulations de peinture aqueuse ou non aqueuse selon l'invention se caractérisent en ce qu'elles possèdent un coefficient de diffusion de la lumière S supérieur à celui des simples mélanges correspondants.

Les compositions de charge de masse non couchée selon l'invention se caractérisent, de manière préférentielle, en ce qu'elles possèdent une opacité, déterminée selon la norme DIN 53146, supérieure à celle des simples mélanges correspondants.

De même, de manière préférentielle, les suspensions aqueuses contenant les compositions composites de l'invention ou les sauces de couchage selon l'invention ou les compositions de traitement de surface du papier ou les compositions de charge de masse non couchée selon l'invention se caractérisent en ce qu'elles possèdent une blancheur, déterminée selon la norme TAPPI T452 ISO 2470, supérieure à celle des simples mélanges correspondants.

De manière préférentielle, les sauces de couchage ou les compositions de traitement de surface du papier selon l'invention se caractérisent en ce qu'elles possèdent une brillance TAPPI 75° selon Lehmann supérieure à celle d'une sauce de couchage contenant les simples suspensions des mélanges correspondants.

Enfin, et de manière préférentielle, les sauces de couchage ou les compositions de traitement de surface du papier ou les compositions de charge de masse non couchée selon l'invention, se caractérisent en ce que la courbe, déterminée selon le test d'imprimabilité ISIT dont le mode opératoire est explicité à l'exemple 9 et représentant la force de décollement d'encre en fonction du temps, possède des pentes de montée et de descente plus faibles et une valeur maximale plus élevée que les sauces de couchage ou les compositions de traitement de surface du papier ou les compositions de charge de masse non couchée contenant les simples suspensions des mélanges correspondants.

De plus, les feuilles de papier contenant, dans la masse, les compositions composites selon l'invention se caractérisent en ce qu'elles possèdent une blancheur, déterminée selon la norme TAPPI T452 ISO 2470, supérieure aux feuilles de papier contenant, dans la masse, les simples suspensions des mélanges de charges ou pigments correspondants et en ce qu'elles possèdent une opacité, mesurée selon la norme DIN 53146, supérieure aux feuilles de papier contenant les simples suspensions des mélanges de charges ou pigments correspondants.

La portée et l'intérêt de l'invention seront mieux perçus grâce aux exemples suivants, qui ne sauraient être limitatifs et notamment quant à l'ordre d'introduction des divers constituants des compositions composites.

<u>EXEMPLE 1 :</u>

Cet exemple concerne la préparation des compositions composites contenant différents pigments ou charges.

Les viscosités spécifiques mentionnées dans tous les exemples sont déterminées par la méthode définie dans le EP 0 542 643.

Essai n° 1 :

Cet essai, illustrant l'art antérieur, est un simple mélange de 750 grammes sec d'une suspension aqueuse à 72 % d'un marbre norvégien de granulométrie équivalente à 75 % des particules ont un diamètre inférieur à 1 μm déterminé par la mesure Sédigraph 5100 et contenant 1 % en poids sec d'un copolymère acrylique de viscosité spécifique égale à 0,8 avec 250 grammes sec d'une suspension aqueuse de talc finlandais de granulométrie équivalente à 45 % des particules ont un diamètre inférieur à 2 μm déterminé par la mesure Sédigraph 5100 contenant 0,08 % en poids sec de soude, 1,4 % en poids sec d'un polyoxyde d'alkylène et 0,15 % en poids sec d'un polyacrylate de sodium de viscosité spécifique égale à 0,4 pour obtenir une suspension aqueuse à 70 % de concentration d'un mélange marbre-talc.

Essai n° 2 :

Pour cet essai, illustrant l'invention, on réalise la préparation de la composition aqueuse co-structurée selon l'invention par l'introduction dans un mélangeur et sous agitation de :

- 750 grammes sec de marbre norvégien de granulométrie telle que 75 % des particules ont un diamètre inférieur à 1 μm déterminée par la mesure Sédigraph 5100,
- 250 grammes sec d'un talc provenant de Finlande de granulométrie telle que 45 % des particules ont un diamètre inférieur à 2 μm déterminée par la mesure Sédigraph 5100,
- 5 grammes sec d'un agent liant copolymère acrylique de composition monomérique égale à 90 % en poids d'acide acrylique et 10 % en poids de méthacrylate de tristyrylphénol à 25 moles d'oxyde d'éthylène.
- la quantité d'eau nécessaire à la formation de la composition aqueuse co-structurée selon l'invention, à 65% de concentration en matière sèche.

Après 30 minutes d'agitation et de formation de la co-structure entre les grains de marbre et de talc à l'aide de l'agent liant, il est ajouté, à la composition selon l'invention, 5,2 grammes sec d'un agent dispersant de l'art antérieur à savoir un polyacrylate partiellement neutralisé à la soude et de viscosité spécifique égale à 0,5 ainsi que le complément de soude et d'eau nécessaire pour obtenir une suspension aqueuse de la composition composite selon l'invention présentant une concentration en matière sèche égale à 59,1 % et un pH entre 9 et 10.

Essai n° 3 :

Cet essai, illustrant l'art antérieur, est un simple mélange de 750 grammes sec d'une suspension aqueuse à 72 % de craie de Champagne de granulométrie équivalente à 75 % des particules ont un diamètre inférieur à 1 μm déterminé par la mesure Sédigraph 5100 et contenant 0,80 % en poids sec d'un polyacrylate de sodium de viscosité spécifique égale à 0,5 avec 250 grammes sec d'une suspension aqueuse d'un talc finlandais de granulométrie équivalente à 45 % des particules ont un diamètre inférieur à 2 μm déterminé par la mesure Sédigraph 5100 contenant 0,08 % en poids sec de soude, 1,4 % en poids sec d'un polyoxyde d'alkylène et 0,15 % en poids sec d'un polyacrylate de sodium de viscosité spécifique égale à 0,4 pour obtenir une suspension aqueuse à 62,1 % de concentration d'un mélange craie-talc.

Essai n° 4 :

Cet essai, illustrant l'invention, est réalisé avec le même mode opératoire et le même matériel que dans l'essai n° 2, en remplaçant le marbre par de la craie de Champagne de même granulométrie.

On obtient ainsi une suspension aqueuse de la composition composite co-structurée selon l'invention, (75 % en poids sec de craie - 25 % en poids sec de talc) à 57 % de concentration en matière sèche.

Essai n° 5 :

Cet essai, illustrant l'art antérieur, est un simple mélange de 750 grammes sec d'une suspension aqueuse à 51 % de carbonate de calcium précipité de granulométrie équivalente à 60 % des particules ont un diamètre inférieur à 2 μm déterminé par la mesure Sédigraph 5100 et dispersé avec 0,3 % en poids sec d'un polyacrylate de sodium de viscosité spécifique égale à 0,7 avec 250 grammes sec d'une suspension aqueuse d'un talc finlandais de granulométrie équivalente à 45 % des particules ont un diamètre inférieur à 2 μm déterminé par la mesure Sédigraph 5100 contenant 0,08 % en poids sec de soude, 1,4 % en poids sec d'un polyoxyde d'alkylène et 0,15 % en poids sec d'un polyacrylate de sodium de viscosité spécifique égale à 0,4 pour obtenir une suspension aqueuse à 54,5 % d'un mélange carbonate de calcium précipité-talc.

Essai n ° 6 :

Cet essai, illustrant l'invention, est réalisé avec le même mode opératoire et le même matériel que dans l'essai n° 2, en remplaçant le marbre par du carbonate de calcium précipité de granulométrie équivalente à 60 % des particules ont un diamètre inférieur à 2 μm.

On obtient ainsi une suspension aqueuse de la composition composite co-structurée selon l'invention, (75 % en poids sec de carbonate de calcium précipité - 25 % en poids sec de talc) à 58 % de concentration en matière sèche.

Essai n° 7 :

Cet essai, illustrant l'art antérieur, est un simple mélange de 750 grammes sec d'une suspension aqueuse à 72 % de marbre norvégien de granulométrie équivalente à 75 % des particules ont un diamètre inférieur à 1 μm déterminé par la mesure Sédigraph 5100 et contenant 1,00 % en poids sec d'un copolymère acrylique de viscosité spécifique égale à 0,8 avec 250 grammes sec d'une suspension aqueuse d'un mica autrichien de granulométrie équivalente à 18 % des particules ont un diamètre inférieur à 1 μm déterminé par la mesure Sédigraph 5100 et contenant 0,25 % en poids sec d'un polyacrylate de sodium de viscosité spécifique égale à 0,4 pour obtenir une suspension aqueuse à 68,6 % de concentration d'un mélange marbre-mica.

Essai n° 8 :

Cet essai, illustrant l'invention, est réalisé avec le même mode opératoire et le même matériel que dans l'essai n° 2, en remplaçant le talc par du mica autrichien de granulométrie équivalente à 18 % des particules ont un diamètre inférieur à 1 μm.

On obtient ainsi une suspension aqueuse de la composition composite co-structurée selon l'invention, (75 % en poids sec de marbre - 25 % en poids sec de mica) à 61,3 % de concentration en matière sèche.

Essai n° 9 :

Cet essai, illustrant l'art antérieur, est un simple mélange de 750 grammes sec d'une suspension aqueuse à 72 % de marbre norvégien de granulométrie équivalente à 75 % des particules ont un diamètre inférieur à 1 μm déterminé par la mesure Sédigraph 5100 et contenant 1 % en poids sec d'un copolymère acrylique de viscosité spécifique égale à 0,8 avec 250 grammes sec d'une suspension aqueuse d'un kaolin anglais de granulométrie équivalente à 64 % des particules ont un diamètre inférieur à 1 μm déterminé par la mesure Sédigraph 5100 contenant 0,2 % en poids sec d'un polyacrylate de sodium de viscosité spécifique égale à 0,4 pour obtenir une suspension aqueuse à 70,2 % de concentration d'un mélange marbre-kaolin.

Essai n° 10 :

Cet essai, illustrant l'invention, est réalisé avec le même mode opératoire et le même matériel que dans l'essai n° 2, en remplaçant le talc par du kaolin anglais de granulométrie équivalente à 64 % des particules ont un diamètre inférieur à 1 μm déterminé par la mesure Sédigraph 5100.

On obtient ainsi une suspension aqueuse de la composition composite co-structurée selon l'invention, (75 % en poids sec de marbre - 25 % en poids sec de kaolin) à 62,1 % de concentration en matière sèche.

Essai n° 11 :

Cet essai, illustrant l'art antérieur, est un simple mélange de 750 grammes sec d'une suspension aqueuse à 72 % de marbre norvégien de granulométrie équivalente à 75 % des particules ont un diamètre inférieur à 1 μm mesuré par analyse Sédigraph 5100 et contenant 1 % en poids sec d'un copolymère acrylique de viscosité spécifique égale à 0,8 avec 250 grammes sec d'une suspension aqueuse d'un dioxyde de titane de type rutile de granulométrie équivalente à 86 % des particules ont un diamètre inférieur à 1 μm déterminé par la mesure Sédigraph 5100 contenant 0,32 % en poids sec d'un polyacrylate de sodium de viscosité spécifique égale à 0,4 pour obtenir une suspension aqueuse à 71,5 % de concentration d'un mélange marbre-dioxyde de titane.

Essai n° 12 :

Pour cet essai, illustrant l'invention, la préparation de la composition co-structurée est réalisée avec le même mode opératoire et le même matériel que dans l'essai n° 2, en remplaçant le talc par du dioxyde de titane de type rutile

de granulométrie équivalente à 86 % des particules ont un diamètre inférieur à 1 µm.
Après la formation de la co-structure entre les grains de marbre et de dioxyde de titane à l'aide de l'agent liant, il est ajouté, 0,15 % en poids sec d'un agent dispersant de l'art antérieur à savoir un polyacrylate de sodium de viscosité spécifique égale à 0,5.

On obtient alors une suspension aqueuse de la composition composite co-structurée selon l'invention, (75 % en poids sec de marbre - 25 % en poids sec de dioxyde de titane) à 58,8 % de concentration en matière sèche.

Essai n°13 :

Cet essai, illustrant l'art antérieur, est un simple mélange de 750 grammes sec d'une suspension aqueuse à 72 % de marbre norvégien de granulométrie équivalente à 75 % des particules ont un diamètre inférieur à 1 µm mesuré par analyse Sédigraph 5100 et contenant 1 % en poids sec d'un copolymère acrylique de viscosité spécifique égale à 0,8 avec :

- 125 grammes sec d'une suspension aqueuse de kaolin anglais de granulométrie équivalente à 64 % des particules ont un diamètre inférieur à 1 µm mesuré par analyse Sédigraph 5100 et contenant 0,3 % en poids sec d'un polyacrylate de sodium de viscosité spécifique égale à 0,4
- et 125 grammes sec d'une suspension aqueuse de talc finlandais de granulométrie équivalente à 45 % des particules ont un diamètre inférieur à 2 µm mesuré par analyse Sédigraph 5100 et contenant 0,08 % en poids sec de soude, 1,4 % en poids sec d'un polyoxyde d'alkylène et 0,15 % en poids sec d'un polyacrylate de sodium de viscosité spécifique égale à 0,4 de manière à obtenir une suspension aqueuse à 70,2 % de concentration en matière sèche d'un mélange marbre-kaolin-talc.

Essai n°14:

Cet essai, illustrant l'invention, est réalisé avec un mode opératoire et du matériel identique en tout point à l'essai n° 2, en remplaçant la moitié du talc par du kaolin anglais de granulométrie équivalente à 64 % des particules ont un diamètre inférieur à 1 µm mesurée par analyse Sédigraph 5100.

On obtient ainsi une suspension aqueuse de la composition composite co-structurée selon l'invention (75 % en poids sec de marbre - 12,5 % en poids sec de kaolin - 12,5 % en poids sec de talc) à 60,0 % de concentration en matière sèche.

Essai n° 15 :

Cet essai, illustrant l'art antérieur, est un simple mélange de 800 grammes sec d'une suspension aqueuse à 72 % de marbre norvégien de granulométrie équivalente à 75 % des particules ont un diamètre inférieur à 1 µm mesuré par analyse Sédigraph 5100 et contenant 1 % en poids sec d'un copolymère acrylique de viscosité spécifique égale à 0,8 avec 200 grammes sec d'une suspension aqueuse d'hydroxyde d'aluminium cristallin de granulométrie équivalente à 72 % des particules ont un diamètre inférieur à 2 µm déterminé par la mesure Sédigraph 5100 et contenant 0,3 % en poids sec d'un polyacrylate de sodium de viscosité spécifique égale à 0,7 de manière à obtenir une suspension aqueuse à 70,9 % de concentration en matière sèche d'un mélange marbre-hydroxyde d'aluminium.

Essai n°16 :

Pour cet essai, illustrant l'invention, on réalise la préparation de la composition aqueuse co-structurée selon l'invention par l'introduction dans un mélangeur et sous agitation de :

- 800 grammes sec de marbre norvégien de granulométrie telle que 75 % des particules ont un diamètre inférieur à 1 µm déterminée par la mesure Sédigraph 5100,
- 200 grammes sec d'un hydroxyde d'aluminium cristallin de granulométrie telle que 72 % des particules ont un diamètre inférieur à 2 µm déterminée par la mesure Sédigraph 5100,
- 4 grammes sec d'un agent liant copolymère acrylique de composition monomérique égale à 90 % en poids d'acide acrylique et 10 % en poids de méthacrylate de tristyrylphénol à 25 moles d'oxyde d'éthylène.
- la quantité d'eau nécessaire à la formation de la composition aqueuse co-structurée selon l'invention, à 65% de concentration en matière sèche.

Après 30 minutes d'agitation et de formation de la co-structure entre les grains de marbre et d'hydroxyde d'aluminium à l'aide de l'agent liant, il est ajouté, à la composition selon l'invention, 5,6 grammes sec d'un agent dispersant

de l'art antérieur à savoir un polyacrylate partiellement neutralisé à la soude et de viscosité spécifique égale à 0,5 ainsi que le complément de soude et d'eau nécessaire pour obtenir une suspension aqueuse de la composition composite selon l'invention présentant une concentration en matière sèche égale à 60,3 % et un pH entre 9 et 10.

Essai n°17 :

Cet essai, illustrant l'art antérieur, est un simple mélange de 800 grammes sec d'une suspension aqueuse à 72 % de marbre norvégien de granulométrie équivalente à 75 % des particules ont un diamètre inférieur à 1 μm mesuré par analyse Sédigraph 5100 et contenant 1 % en poids sec d'un copolymère acrylique de viscosité spécifique égale à 0,8 avec 200 grammes sec d'une suspension aqueuse d'un condensat urée-formol de surface spécifique égale à 17 $m^2/g$ mesurée selon la méthode BET (DIN 66132) et contenant 0,5 % en poids sec d'un polyacrylate de sodium de viscosité spécifique égale à 0,7 de manière à obtenir une suspension aqueuse à 45,1 % de concentration en matière sèche d'un mélange marbre-condensat d'urée-formol.

Essai n° 18 :

Cet essai, illustrant l'invention, est réalisé avec un mode opératoire et du matériel identique en tout point à l'essai n° 16, en remplaçant l'hydroxyde d'aluminium par un condensat urée-formol de surface spécifique égale à 17 $m^2/g$ mesurée selon la méthode BET (DIN 66132).

On obtient ainsi une suspension aqueuse de la composition composite co-structurée selon l'invention (80 % en poids sec de marbre - 20 % en poids sec d'un condensat urée-formol) à 51,2 % de concentration en matière sèche.

Essai n° 19 :

Cet essai, illustrant l'art antérieur, est un simple mélange de 800 grammes sec d'une suspension aqueuse à 72 % de marbre norvégien de granulométrie équivalente à 75 % des particules ont un diamètre inférieur à 1 μm mesuré par analyse Sédigraph 5100 et contenant 1 % en poids sec d'un copolymère acrylique de viscosité spécifique égale à 0,8 avec 200 grammes sec d'une suspension aqueuse de cellulose blanchie de granulométrie équivalente à 99 % des particules ont un diamètre inférieur à 75 μm mesuré par tamiseur à courant d'air du type Alpine LS 200 et contenant 0,5 % en poids sec d'un polyacrylate de sodium de viscosité spécifique égale à 0,7 de manière à obtenir une suspension aqueuse à 44,8 % de concentration en matière sèche d'un mélange marbre-cellulose blanchie.

Essai n° 20 :

Cet essai, illustrant l'invention, est réalisé avec un mode opératoire et du matériel identique en tout point à l'essai n° 16, en remplaçant l'hydroxyde d'aluminium par de la cellulose blanchie de granulométrie équivalente à 99 % des particules ont un diamètre inférieur à 75 μm mesurée par tamiseur à courant d'air du type Alpine LS 200.

On obtient ainsi une suspension aqueuse de la composition composite co-structurée selon l'invention (80 % en poids sec de marbre - 20 % en poids sec de cellulose blanchie) à 46,9 % de concentration en matière sèche.

Essai n° 21 :

Cet essai, illustrant l'art antérieur, est un simple mélange de 500 grammes sec d'une craie de Champagne de granulométrie équivalente à 45 % des particules ont un diamètre inférieur à 2 μm déterminée par la mesure Sédigraph 5100 avec 500 grammes d'un talc australien de granulométrie équivalente à 25 % des particules ont un diamètre inférieur à 2 μm déterminée par la mesure Sédigraph 5100 pour obtenir un mélange pulvérulent craie-talc à 100 % de concentration en matière sèche.

Essai n° 22 :

Pour cet essai, illustrant l'invention, on réalise la préparation de la composition co-structurée, sous forme de poudre selon l'invention, par l'introduction dans un mélangeur et sous agitation de :

- 500 grammes sec d'une craie de Champagne de granulométrie telle que 45 % des particules ont un diamètre inférieur à 2 μm déterminée par la mesure Sédigraph 5100,
- 500 grammes sec d'un talc provenant d'Australie de granulométrie telle que 25 % des particules ont un diamètre inférieur à 2 μm déterminée par la mesure Sédigraph 5100,
- 10 grammes sec d'un agent liant copolymère acrylique de composition monomérique égale à 90 % en poids d'acide

acrylique et 10 % en poids de méthacrylate de tristyrylphénol à 25 moles d'oxyde d'éthylène.

Essai n° 23 :

Cet essai, illustrant l'art antérieur, est un simple mélange de 900 grammes sec d'une suspension aqueuse d'un talc finlandais de granulométrie équivalente à 45% des particules ont un diamètre inférieur à 2 μm déterminé par la mesure Sédigraph 5100 et contenant 0,08 % en poids sec de soude, 1,4 % en poids sec d'un polyoxyde d'alkylène et 0,15 % en poids sec d'un polyacrylate de sodium de viscosité spécifique égale à 0,4 avec 100 grammes sec d'un kaolin américain de granulométrie équivalente à 91% des particules ont un diamètre inférieur à 0,5 μm déterminé par la mesure Sédigraph 5100 pour obtenir une suspension aqueuse à 67,8% de concentration d'un mélange talc-kaolin.

EXEMPLE 2 :

Cet exemple illustre la préparation de compositions composites selon l'invention à divers ratios de pigments ou charges.

A cet effet, on prépare, avec le même mode opératoire et le même matériel que dans l'essai n° 2 à l'exception de la quantité d'eau qui est ajoutée en une seule fois pour obtenir la concentration en matière sèche finale, les compositions composites selon l'invention comprenant :

Essai n° 24 :

95 % en poids sec, par rapport au poids sec total des charges, de marbre norvégien de granulométrie équivalente à 62 % des particules ont un diamètre inférieur à 1 μm déterminé par la mesure Sédigraph 5100

5 % en poids sec, par rapport au poids sec total des charges, de talc finlandais de granulométrie équivalente à 45 % des particules ont un diamètre inférieur à 2 μm déterminé par la mesure Sédigraph 5100

0,1 % en poids sec, par rapport au poids sec total des charges, d'un agent liant copolymère acrylique composé de 90 % en poids d'acide acrylique et 10 % en poids de méthacrylate de tristyrylphénol à 25 moles d'oxyde d'éthylène

et remise en suspension aqueuse à 59,8 % de concentration en matière sèche par la mise en oeuvre d'eau et de 0,67 % en poids sec, par rapport au poids sec total des charges, d'un polyacrylate partiellement neutralisé à la soude et de viscosité spécifique égale à 0,54.

Essai n°25 :

90 % en poids sec, par rapport au poids sec total des charges, de marbre norvégien de granulométrie équivalente à 62 % des particules ont un diamètre inférieur à 1 μm déterminé par la mesure Sédigraph 5100

10 % en poids sec, par rapport au poids sec total des charges, de talc finlandais de granulométrie équivalente à 45 % des particules ont un diamètre inférieur à 2 μm déterminé par la mesure Sédigraph 5100

0,2 % en poids sec, par rapport au poids sec total des charges, d'un agent liant copolymère acrylique de tristyrylphénol à 25 moles d'oxyde d'éthylène

et remise en suspension aqueuse à 59,8 % de concentration en matière sèche par la mise en oeuvre d'eau et de 0,63 % en poids sec, par rapport au poids sec total des charges, d'un polyacrylate partiellement neutralisé à la soude et de viscosité spécifique égale à 0,54.

Essai n°26 :

85 % en poids sec, par rapport au poids sec total des charges, de marbre norvégien de granulométrie équivalente à 75 % des particules ont un diamètre inférieur à 1 μm déterminé par la mesure Sédigraph 5100

15 % en poids sec, par rapport au poids sec total des charges, de talc finlandais de granulométrie équivalente à 45 % des particules ont un diamètre inférieur à 2 μm déterminé par la mesure Sédigraph 5100

0,3 % en poids sec, par rapport au poids sec total des charges, d'un agent liant copolymère acrylique composé de 90 % en poids d'acide acrylique et 10 % en poids de méthacrylate de tristyrylphénol à 25 moles d'oxyde d'éthylène

et remise en suspension aqueuse à 34,0 % de concentration en matière sèche par la mise en oeuvre d'eau et de 0,78 % en poids sec, par rapport au poids sec total des charges, d'un polyacrylate de sodium de viscosité spécifique égale à 0,54.

Essai n° 27 :

80 % en poids sec, par rapport au poids sec total des charges, de marbre norvégien de granulométrie équivalente à 62 % des particules ont un diamètre inférieur à 1 µm déterminé par la mesure Sédigraph 5100

20 % en poids sec, par rapport au poids sec total des charges, de talc finlandais de granulométrie équivalente à 45 % des particules ont un diamètre inférieur à 2 µm déterminé par la mesure Sédigraph 5100

0,4 % en poids sec, par rapport au poids sec total des charges, d'un agent liant copolymère acrylique composé de 90 % en poids d'acide acrylique et 10 % en poids de méthacrylate de tristyrylphénol à 25 moles d'oxyde d'éthylène

et remise en suspension aqueuse à 59,7 % de concentration en matière sèche par la mise en oeuvre d'eau et de 0,56 % en poids sec, par rapport au poids sec total des charges, d'un polyacrylate partiellement neutralisé à la soude et de viscosité spécifique égale à 0,54.

Essai n°28:

70 % en poids sec, par rapport au poids sec total des charges, de marbre norvégien de granulométrie équivalente à 75 % des particules ont un diamètre inférieur à 1 µm déterminé par la mesure Sédigraph 5100

30 % en poids sec, par rapport au poids sec total des charges, de talc finlandais de granulométrie équivalente à 45 % des particules ont un diamètre inférieur à 2 µm déterminé par la mesure Sédigraph 5100

0,6 % en poids sec, par rapport au poids sec total des charges, d'un agent liant copolymère acrylique composé de 90 % en poids d'acide acrylique et 10 % en poids de méthacrylate de tristyrylphénol à 25 moles d'oxyde d'éthylène

et remise en suspension aqueuse à 37,5 % de concentration en matière sèche par la mise en oeuvre d'eau et de 0,64 % en poids sec, par rapport au poids sec total des charges, d'un polyacrylate de sodium de viscosité spécifique égale à 0,54.

Essai n°29:

70 % en poids sec, par rapport au poids sec total des charges, de marbre norvégien de granulométrie équivalente à 62 % des particules ont un diamètre inférieur à 1 µm déterminé par la mesure Sédigraph 5100

30 % en poids sec, par rapport au poids sec total des charges, de talc finlandais de granulométrie équivalente à 45 % des particules ont un diamètre inférieur à 2 µm déterminé par la mesure Sédigraph 5100

0,6 % en poids sec, par rapport au poids sec total des charges, d'un agent liant copolymère acrylique composé de 90 % en poids d'acide acrylique et 10 % en poids de méthacrylate de tristyrylphénol à 25 moles d'oxyde d'éthylène

et remise en suspension aqueuse à 58,0 % de concentration en matière sèche par la mise en oeuvre d'eau et de 0,49 % en poids sec, par rapport au poids sec total des charges, d'un polyacrylate de sodium partiellement neutralisé de viscosité spécifique égale à 0,5.

Essai n° 30 :

Cet essai, illustrant l'art antérieur, est un simple mélange de 700 grammes sec d'une suspension aqueuse d'un marbre norvégien de granulométrie équivalente à 62 % des particules ont un diamètre inférieur à 1 μm déterminé par la mesure Sédigraph 5100 et contenant 1 % en poids sec d'un polyacrylate de sodium de viscosité spécifique égale à 0,7 avec 300 grammes sec d'une suspension aqueuse de talc finlandais de granulométrie équivalente à 45 % des particules ont un diamètre inférieur à 2 μm déterminé par la mesure Sédigraph 5100 contenant 0,08 % en poids sec de soude, 1,4 % en poids sec d'un polyoxyde d'alkylène et 0,15 % en poids sec d'un polyacrylate de sodium de viscosité spécifique égale à 0,4 pour obtenir une suspension aqueuse à 66,4 % de concentration d'un mélange marbre-talc.

Essai n° 31 :

Dans cet essai illustrant l'invention, on prépare, avec le même mode opératoire et le même matériel que dans l'essai n° 29, la composition composite selon l'invention comprenant :

- 50 % en poids sec, par rapport au poids sec total des charges, de marbre norvégien de granulométrie équivalente à 62 % des particules ont un diamètre inférieur à 1 μm déterminé par la mesure Sédigraph 5100
- 50 % en poids sec, par rapport au poids sec total des charges, de talc finlandais de granulométrie équivalente à 45 % des particules ont un diamètre inférieur à 2 μm déterminé par la mesure Sédigraph 5100
- 1,0 % en poids sec, par rapport au poids sec total des charges, d'un agent liant copolymère acrylique composé de 90 % en poids d'acide acrylique et 10 % en poids de méthacrylate de tristyrylphénol à 25 moles d'oxyde d'éthylène

et remise en suspension aqueuse à 59,8 % de concentration en matière sèche par la mise en oeuvre d'eau et de 0,7 % en poids sec, par rapport au poids sec total des charges, d'un polyacrylate de sodium partiellement neutralisé de viscosité spécifique égale à 0,5 et 0,2 % en poids sec, par rapport au poids sec total des charges, d'un condensat d'acide naphtalène sulfonique.

Essai n° 32 :

Comme dans l'essai précédent, on prépare la composition composite selon l'invention comprenant :

- 25 % en poids sec, par rapport au poids sec total des charges, de marbre norvégien de granulométrie équivalente à 62 % des particules ont un diamètre inférieur à 1 μm déterminé par la mesure Sédigraph 5100
- 75 % en poids sec, par rapport au poids sec total des charges, de talc finlandais de granulométrie équivalente à 45 % des particules ont un diamètre inférieur à 2 μm déterminé par la mesure Sédigraph 5100
- 1,5 % en poids sec, par rapport au poids sec total des charges, d'un agent liant copolymère acrylique composé de 90 % en poids d'acide acrylique et 10 % en poids de méthacrylate de tristyrylphénol à 25 moles d'oxyde d'éthylène

et remise en suspension aqueuse à 56,6 % de concentration en matière sèche par la mise en oeuvre d'eau et de 0,63 % en poids sec, par rapport au poids sec total des charges, d'un polyacrylate de sodium partiellement neutralisé de viscosité spécifique égale à 0,5 et 0,05 % en poids sec, par rapport au poids sec total des charges, d'un condensat d'acide naphtalène-sulfonate.

EXEMPLE 3 :

Cet exemple illustre la préparation de compositions composites selon l'invention avec différentes quantités d'agent liant pour une même composition en pigment ou charge.

A cet effet, on prépare avec le même mode opératoire et le même matériel que dans l'exemple 2, les compositions composites selon l'invention comprenant comme charges :

- 75 % en poids sec, par rapport au poids sec total des charges, de marbre norvégien de granulométrie équivalente à 62 % des particules ont un diamètre inférieur à 1 μm déterminé par la mesure Sédigraph 5100
- 25 % en poids sec, par rapport au poids sec total des charges, de talc finlandais de granulométrie équivalente à 45 % des particules ont un diamètre inférieur à 2 μm déterminé par la mesure Sédigraph 5100.

et comme liant différentes quantités d'un même agent liant.

Ces différentes quantités testées de l'agent liant copolymère acrylique de composition en monomères égale à 90% en poids d'acide acrylique et 10% en poids de méthacrylate de tristyrylphénol à 25 moles d'oxyde d'éthylène sont :

Essai n° 33

0,13 % en poids sec, par rapport au poids sec total des charges, de l'agent liant.
La remise en suspension aqueuse à 36,8 % de concentration en matière sèche est effectuée par la mise en oeuvre d'eau et de 0,69 % en poids sec, par rapport au poids sec total des charges, d'un polyacrylate de sodium de viscosité spécifique égale à 0,54.

Essai n° 34 :

0,25 % en poids sec, par rapport au poids sec total des charges, de l'agent liant.
La remise en suspension aqueuse à 36,6 % de concentration en matière sèche est effectuée par la mise en oeuvre d'eau et de 0,69 % en poids sec, par rapport au poids sec total des charges, d'un polyacrylate de sodium de viscosité spécifique égale à 0,54.

Essai n° 35 :

0,38 % en poids sec, par rapport au poids sec total des charges, de l'agent liant.
La remise en suspension aqueuse à 36,7 % de concentration en matière sèche est effectuée par la mise en oeuvre d'eau et de 0,69 % en poids sec, par rapport au poids sec total des charges, d'un polyacrylate de sodium de viscosité spécifique égale à 0,54.

Essai n°36 :

1,25 % en poids sec, par rapport au poids sec total des charges, de l'agent liant.
La remise en suspension aqueuse à. 36,1 % de concentration en matière sèche est effectuée par la mise en oeuvre d'eau et de 0,69 % en poids sec, par rapport au poids sec total des charges, d'un polyacrylate de sodium de viscosité spécifique égale à 0,54.

EXEMPLE 4 :

Cet exemple illustre la préparation de compositions composites selon l'invention avec des charges ou pigments de différentes granulométries.
A cet effet, on prépare avec le même mode opératoire et le même matériel que dans l'exemple 2, les compositions composites selon l'invention comprenant :

Essai n° 37 :

| | |
|---|---|
| 75 % | en poids sec, par rapport au poids sec total des charges, de marbre norvégien de granulométrie équivalente à 62 % des particules ont un diamètre inférieur à 1 μm déterminé par la mesure Sédigraph 5100 |
| 25 % | en poids sec, par rapport au poids sec total des charges, de talc finlandais de granulométrie équivalente à 45 % des particules ont un diamètre inférieur à 2 μm déterminé par la mesure Sédigraph 5100 |
| 0,5 % | en poids sec, par rapport au poids sec total des chargés, d'un agent liant copolymère acrylique composé de 90 % en poids d'acide acrylique et 10 % en poids de méthacrylate de tristyrylphénol à 25 moles d'oxyde d'éthylène |

et remise en suspension aqueuse à 36,5 % de concentration en matière sèche par la mise en oeuvre d'eau et de 0,69 % en poids sec, par rapport au poids sec total des charges, d'un polyacrylate de sodium de viscosité spécifique égale à 0,54.

Essai n°38 :

75 % en poids sec, par rapport au poids sec total des charges, de marbre norvégien de granulométrie équivalente à 35 % des particules ont un diamètre inférieur à 1 μm déterminé par la mesure Sédigraph 5100

25 % en poids sec, par rapport au poids sec total des charges, de talc finlandais de granulométrie équivalente à 45 % des particules ont un diamètre inférieur à 2 μm déterminé par la mesure Sédigraph 5100

0,5 % en poids sec, par rapport au poids sec total des charges, d'un agent liant copolymère acrylique composé de 90 % en poids d'acide acrylique et 10 % en poids de méthacrylate de tristyrylphénol à 25 moles d'oxyde d'éthylène

et remise en suspension aqueuse à 36,4 % de concentration en matière sèche par la mise en oeuvre d'eau et de 0,69 % en poids sec, par rapport au poids sec total des charges, d'un polyacrylate de sodium de viscosité spécifique égale à 0,54.

Essai n°39 :

75 % en poids sec, par rapport au poids sec total des charges, de marbre norvégien de granulométrie équivalente à 75 % des particules ont un diamètre inférieur à 1 μm déterminé par la mesure Sédigraph 5100

25 % en poids sec, par rapport au poids sec total des charges, de talc australien de granulométrie équivalente à 25 % des particules ont un diamètre inférieur à 2 μm déterminé par la mesure Sédigraph 5100

0,5 % en poids sec, par rapport au poids sec total des charges, d'un agent liant copolymère acrylique composé de 90 % en poids d'acide acrylique et 10 % en poids de méthacrylate de tristyrylphénol à 25 moles d'oxyde d'éthylène

et remise en suspension aqueuse à 35,4 % de concentration en matière sèche par la mise en oeuvre d'eau et de 0,52 % en poids sec, par rapport au poids sec total des charges, d'un polyacrylate partiellement neutralisé par la soude, de viscosité spécifique égale à 0,5.

Essai n° 40 :

75 % en poids sec, par rapport au poids sec total des charges, de marbre norvégien de granulométrie équivalente à 75 % des particules ont un diamètre inférieur à 1 μm déterminé par la mesure Sédigraph 5100

25 % en poids sec, par rapport au poids sec total des charges, de talc américain de granulométrie équivalente à 35 % des particules ont un diamètre inférieur à 2 μm mesuré par la méthode Sédigraph 5100

0,5 % en poids sec, par rapport au poids sec total des charges, d'un agent liant copolymère acrylique composé de 90 % en poids d'acide acrylique et 10 % en poids de méthacrylate de tristyrylphénol à 25 moles d'oxyde d'éthylène

et remise en suspension aqueuse à 36,1 % de concentration en matière sèche par la mise en oeuvre d'eau et de 0,52 % en poids sec, par rapport au poids sec total des charges, d'un polyacrylate partiellement neutralisé par la soude, de viscosité spécifique égale à 0,5.

Essai n° 41 :

50 % en poids sec, par rapport au poids sec total des charges, de craie de champagne de granulométrie équivalente à 36 % des particules ont un diamètre inférieur à 2 μm déterminé par la mesure Sédigraph 5100

50 % en poids sec, par rapport au poids sec total des charges, de talc australien de granulométrie équivalente à 25 % des particules ont un diamètre inférieur à 2 μm déterminé par la mesure Sédigraph 5100

2 % en poids sec, par rapport au poids sec total des charges, d'un agent liant copolymère acrylique composé de 90 % en poids d'acide acrylique et 10 % en poids de méthacrylate de tristyrylphénol à 25 moles d'oxyde d'éthylène

et remise en suspension aqueuse à 59 % de concentration en matière sèche par la mise en oeuvre d'eau et de 0,35 % en poids sec, par rapport au poids sec total des charges, d'un polyacrylate partiellement neutralisé par la soude, de viscosité spécifique égale à 0,5.

Essai n° 42 :

Cet essai est un essai comparatif de l'essai précédent et illustre la préparation d'une suspension aqueuse selon l'art antérieur par simple mélange de

50 % en poids sec, par rapport au poids sec total des charges, d'une suspension de craie de Champagne de granulométrie équivalente à 36 % des particules ont un diamètre inférieur à 2 μm déterminé par la mesure Sédigraph 5100 et contenant 0,07 % en poids sec d'un polyacrylate de sodium de viscosité spécifique égale à 0,7

50 % en poids sec, par rapport au poids sec total des charges, d'une suspension de talc australien de granulométrie équivalente à 25 % des particules ont un diamètre inférieur à 2 μm déterminé par la mesure Sédigraph 5100 contenant 0,08 % en poids sec de soude, 1,4 % en poids sec d'un polyoxyde d'alkylène et 0,15 % en poids sec d'un polyacrylate de sodium de viscosité spécifique égale à 0,4

pour obtenir une suspension aqueuse à 71,7 % de concentration en matière sèche d'un mélange craie-talc.

EXEMPLE 5 :

Cet exemple concerne l'utilisation de divers agents liants.

Dans ce but, on prépare avec le même mode opératoire et le même matériel que dans l'essai n° 2, les compositions composites selon l'invention comprenant comme charges 75 % en poids sec, par rapport au poids sec total des charges, de marbre norvégien de granulométrie équivalente à 75 % des particules ont un diamètre inférieur à 1 μm déterminé par la mesure Sédigraph 5100 et 25 % en poids sec, par rapport au poids sec total des charges, de talc finlandais de granulométrie équivalente à 45 % des particules ont un diamètre inférieur à 2 μm déterminé par la mesure Sédigraph 5100 et comme liant différentes quantités des différents agents liants suivants :

Essai n ° 43 :

0,5 % en poids sec, par rapport au poids sec total des charges, d'un agent liant qui est un acide polyacrylique de viscosité spécifique égale à 1,78.

La remise en suspension aqueuse à 59,7 % de concentration en matière sèche est effectuée par la mise en oeuvre d'eau et de 0,52 % en poids sec, par rapport au poids sec total des charges, d'un polyacrylate partiellement neutralisé par la soude, de viscosité spécifique égale à 0,5.

Essai n° 44 :

0,5 % en poids sec, par rapport au poids sec total des charges, d'un agent liant qui est un acide polyacrylique de viscosité spécifique égale à 1,55.

La remise en suspension aqueuse à 60,4 % de concentration en matière sèche est effectuée par la mise en oeuvre d'eau et de 0,52 % en poids sec, par rapport au poids sec total des charges, d'un polyacrylate partiellement neutralisé par la soude, de viscosité spécifique égale à 0,5.

5 Essai n°45 :

0,5 % en poids sec, par rapport au poids sec total des charges, d'un agent liant qui est un acide polyacrylique de viscosité spécifique égale à 0,95.

La remise en suspension aqueuse à 59,8 % de concentration en matière sèche est effectuée par la mise en oeuvre d'eau et de 0,52 % en poids sec, par rapport au poids sec total des charges, d'un polyacrylate partiellement neutralisé par la soude, de viscosité spécifique égale à 0,5.

Essai n° 46 :

0,5 % en poids sec, par rapport au poids sec total des charges, d'un agent liant qui est un polyacrylate acide neutralisé à 10 % par de la soude, de viscosité spécifique égale à 5,00.

La remise en suspension aqueuse à 59,9 % de concentration en matière sèche est effectuée par la mise en oeuvre d'eau et de 0,52 % en poids sec, par rapport au poids sec total des charges, d'un polyacrylate partiellement neutralisé par la soude, de viscosité spécifique égale à 0,5.

Essai n° 47 :

0,5 % en poids sec, par rapport au poids sec total des charges, d'un agent liant qui est un homopolymère du méthacrylate d'alcool cétostéarylique.

La remise en suspension aqueuse à 59,2 % de concentration en matière sèche est effectuée par la mise en oeuvre d'eau et de 0,45 % en poids sec, par rapport au poids sec total des charges, d'un polyacrylate partiellement neutralisé par la soude, de viscosité spécifique égale à 0,5.

Essai n° 48 :

0,5 % en poids sec, par rapport au poids sec total des charges, d'un agent liant qui est un copolymère composé de 98 % en poids d'acide méthacrylique et 2 % en poids de méthacrylate d'alcool cétostéarylique.

La remise en suspension aqueuse à 59,7 % de concentration en matière sèche est effectuée par la mise en oeuvre d'eau et de 0,52 % en poids sec, par rapport au poids sec total des charges, d'un polyacrylate partiellement neutralisé par la soude, de viscosité spécifique égale à 0,5.

Essai n° 49 :

0,025 % en poids sec, par rapport au poids sec total des charges, d'un agent liant qui est un chlorure d'ammonium quaternaire de formule :

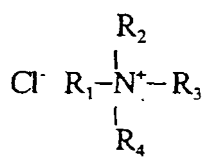

avec $R_1$ = radical méthyle
$R_2 = R_3$ = radical lauryle
$R_4$ = radical benzyle

La remise en suspension aqueuse à 59,3 % de concentration en matière sèche est effectuée par la mise en oeuvre d'eau et de 0,52 % en poids sec, par rapport au poids sec total des charges, d'un polyacrylate partiellement neutralisé par la soude, de viscosité spécifique égale à 0,5.

Essai n° 50 :

0,5 % en poids sec, par rapport au poids sec total des charges, d'un agent liant qui est un alcool linéaire comprenant 12 atomes de carbone.

La remise en suspension aqueuse à 55,0 % de concentration en matière sèche est effectuée par la mise en oeuvre d'eau et de 0,75 % en poids sec, par rapport au poids sec total des charges, d'un polyacrylate partiellement neutralisé par la soude, de viscosité spécifique égale à 0,5.

Essai n° 51 :

0,5 % en poids sec, par rapport au poids sec total des charges, d'un agent liant qui est un alcool linéaire comprenant 18 atomes de carbone.

La remise en suspension aqueuse à 55,1 % de concentration en matière sèche est effectuée par la mise en oeuvre d'eau et de 0,38 % en poids sec, par rapport au poids sec total des charges, d'un polyacrylate de sodium de viscosité spécifique égale à 0,54.

Essai n°52 :

Pour cet essai, illustrant l'invention, on réalise la préparation de la composition aqueuse co-structurée selon l'invention par l'introduction dans un mélangeur et sous agitation de 250 grammes sec d'un talc finlandais de granulométrie telle que 45 % des particules ont un diamètre inférieur à 2 μm déterminé par la mesure Sédigraph 5100, de 5 grammes sec d'un mélange de monomères composé à 90 % en poids d'acide acrylique et 10 % en poids de méthacrylate

de tristyrylphénol à 25 moles d'oxyde d'éthylène, de 115 grammes d'isopropanol ainsi que la quantité d'eau nécessaire à la formation de la composition aqueuse à 30 % de concentration en matière sèche.

Après 30 minutes d'agitation, on procède à la polymérisation du mélange de monomères, selon les procédés bien connus de la polymérisation radicalaire en milieu hydroalcoolique.

La polymérisation terminée et l'isopropanol éliminé par distillation, on ajoute 750 grammes sec de marbre norvégien de granulométrie telle que 75 % des particules ont un diamètre inférieur à 1 μm déterminé par la mesure Sédigraph 5100.

La formation de la co-structure entre les grains de talc et de marbre étant accomplie après 30 minutes d'agitation, il est ajouté 7 grammes d'un agent dispersant à savoir un acide polyacrylique de viscosité spécifique égale à 0,53 de manière à obtenir une suspension aqueuse de la composition composite de l'invention avec une concentration en matière sèche égale à 36,4 %.

Essai n° 53 :

Cet essai, illustrant l'invention, met en oeuvre, selon le même mode opératoire et avec le même matériel que l'essai précédent, 250 grammes sec d'un talc finlandais de granulométrie telle que 45 % des particules ont un diamètre inférieur à 2 μm déterminé par la mesure Sédigraph 5100, 5 grammes sec d'un mélange de monomères composé à 90 % en poids d'acide acrylique et 10 % en poids de méthacrylate de tristyrylphénol à 25 moles d'oxyde d'éthylène auxquels on ajoute 5 grammes sec d'un copolymère composé de 90 % en poids d'acide acrylique et 10 % en poids de méthacrylate de tristyrylphénol à 25 moles d'oxyde d'éthylène, 115 grammes d'isopropanol ainsi que la quantité d'eau nécessaire à la formation de la composition aqueuse à 30 % de concentration en matière sèche.

Après 30 minutes d'agitation, on procède à la polymérisation du mélange de monomères, selon les procédés bien connus de la polymérisation radicalaire en milieu hydroalcoolique.

La polymérisation terminée et l'isopropanol éliminé par distillation, on ajoute 750 grammes sec de marbre norvégien de granulométrie telle que 75 % des particules ont un diamètre inférieur à 1 μm déterminé par la mesure Sédigraph 5100.

La formation de la co-structure entre les grains de talc et de marbre étant accomplie après 30 minutes d'agitation, il est ajouté 7 grammes d'un agent dispersant à savoir un acide polyacrylique de viscosité spécifique égale à 0,53 de manière à obtenir une suspension aqueuse de la composition composite de l'invention avec une concentration en matière sèche égale à 36,6 %.

Essai n° 54 :

Cet essai, illustrant l'invention, met en oeuvre, selon le même mode opératoire et avec le même matériel que l'essai précédent, 250 grammes sec d'un talc finlandais de granulométrie telle que 45 % des particules ont un diamètre inférieur à 2 μm déterminé par la mesure Sédigraph 5100, 12,5 grammes sec d'un mélange de monomères composé à 80 % en poids d'acide acrylique et 20 % en poids de méthacrylate de tristyrylphénol à 25 moles d'oxyde d'éthylène, 115 grammes d'isopropanol ainsi que la quantité d'eau nécessaire à la formation de la composition aqueuse 30 % de concentration en matière sèche.

Après 30 minutes d'agitation, on procède à la polymérisation du mélange de monomères, selon les procédés bien connus de la polymérisation radicalaire en milieu hydroalcoolique.

La polymérisation terminée et l'isopropanol éliminé par distillation, on ajoute 750 grammes sec de marbre norvégien de granulométrie telle que 75 % des particules ont un diamètre inférieur à 1 μm déterminé par la mesure Sédigraph 5100.

La formation de la co-structure entre les grains de talc et de marbre étant accomplie après 30 minutes d'agitation, il est ajouté 7 grammes d'un agent dispersant à savoir un acide polyacrylique de viscosité spécifique égale à 0,53 de manière à obtenir une suspension aqueuse de la composition composite de l'invention avec une concentration en matière sèche égale à 36,6 %.

Essai n° 55

Cet essai, illustrant l'invention, met en oeuvre, selon le même mode opératoire et avec le même matériel que l'essai précédent, 250 grammes sec d'un talc finlandais de granulométrie telle que 45 % des particules ont un diamètre inférieur à 2 μm déterminé par la mesure Sédigraph 5100, 5 grammes sec de méthacrylate de stéaryle, 115 grammes d'isopropanol ainsi que la quantité d'eau nécessaire à la formation de la composition aqueuse 30 % de concentration en matière sèche. Après 30 minutes d'agitation, on procède à la polymérisation du monomère, selon les procédés bien connus de la polymérisation radicalaire en milieu hydroalcoolique.

La polymérisation terminée et l'isopropanol éliminé par distillation, on ajoute 750 grammes sec de marbre

norvégien de granulométrie telle que 75 % des particules ont un diamètre inférieur à 1 µm déterminé par la mesure Sédigraph 5100.

La formation de la co-structure entre les grains de talc et de marbre étant accomplie après 30 minutes d'agitation, il est ajouté 7 grammes d'un agent dispersant à savoir un acide polyacrylique de viscosité spécifique égale à 0,53 de manière à obtenir une suspension aqueuse de la composition composite de l'invention avec une concentration en matière sèche égale à 36,7 %.

EXEMPLE 6 :

Cet exemple concerne la mise en évidence de la formation de la co-structure ou co-adsorption par la mesure et la comparaison de l'homogénéité des différentes suspensions de compositions composites obtenues par dilution à 20 % de concentration en matière sèche.

Dans ce but on dilue à 20 % de concentration les diverses suspensions aqueuses des compositions composites selon l'invention ainsi que les suspensions de l'art antérieur. On en mesure la cohésion macroscopique par le test d'homogénéité qui consiste à déterminer la teneur en sec de la charge présentant au moins un site hydrophile en deux points distincts de la suspension représentative de l'essai, à savoir un point situé au fond du flacon et un point situé à la surface du flacon après séchage à l'étuve de la suspension.

Une fois sec, la teneur en ion calcium de chaque échantillon est déterminée après solubilisation à l'HCl par complexométrie EDTA à un pH de 12 et à l'aide d'un indicateur coloré noir Eriochrome® T.

Essai n° 56 :

Cet essai, illustrant l'art antérieur, met en oeuvre la suspension aqueuse du mélange de l'essai n° 1.

Essai n°57 :

Cet essai, illustrant l'invention, met en oeuvre la suspension aqueuse de l'essai n° 47.

Essai n° 58 :

Cet essai, illustrant l'invention, met en oeuvre la suspension aqueuse de l'essai n° 43.

Essai n° 59 :

Cet essai, illustrant l'invention, met en oeuvre la suspension aqueuse de l'essai n° 44.

Essai n° 60 :

Cet essai, illustrant l'invention, met en oeuvre la suspension aqueuse de l'essai n° 45.

Essai n° 61 :

Cet essai, illustrant l'invention, met en oeuvre la suspension aqueuse de l'essai n° 46.

Essai n° 62:

Cet essai, illustrant l'invention, met en oeuvre la suspension aqueuse de l'essai n° 48.

Essai n° 63 :

Cet essai, illustrant l'invention, met en oeuvre la suspension aqueuse de l'essai n° 49.

Essai n ° 64 :

Cet essai, illustrant l'invention, met en oeuvre la suspension aqueuse de l'essai n° 50.

Essai n° 65 :

Cet essai, illustrant l'invention, met en oeuvre la suspension aqueuse de l'essai n° 51.

Essai n° 66 :

Cet essai, illustrant l'art antérieur, met en oeuvre la suspension aqueuse de l'essai n° 11.

Essai n° 67 :

Cet essai, illustrant l'invention, met en oeuvre la suspension aqueuse de la composition composite selon l'essai n° 12.

Essai n° 68 :

Cet essai, illustrant l'art antérieur, met en oeuvre la suspension aqueuse du mélange de l'essai n° 13.

Essai n° 69 :

Cet essai, illustrant l'invention, met en oeuvre la suspension aqueuse de la composition composite selon l'essai n° 14.

Essai n° 70:

Cet essai, illustrant l'art antérieur, met en oeuvre la suspension aqueuse de l'essai n° 15.

Essai n° 71 :

Cet essai, illustrant l'invention, met en oeuvre la suspension aqueuse de l'essai n° 16.

Essai n° 72 :

Cet essai, illustrant l'art antérieur, met en oeuvre la suspension aqueuse de l'essai n° 17.

Essai n° 73 :

Cet essai, illustrant l'invention, met en oeuvre la suspension aqueuse de l'essai n° 18.

Essai n° 74 :

Cet essai, illustrant l'art antérieur, met en oeuvre la suspension aqueuse de l'essai n° 19.

Essai n° 75 :

Cet essai, illustrant l'invention, met en oeuvre la suspension aqueuse de l'essai n° 20.

Essai n° 76 :

Cet essai, illustrant l'art antérieur, met en oeuvre la suspension aqueuse de l'essai n° 42.

Essai n° 77 :

Cet essai, illustrant l'invention, met en oeuvre la suspension aqueuse de l'essai n° 41.

Essai n° 78 :

Cet essai, illustrant l'invention, met en oeuvre la suspension aqueuse de l'essai n° 29.

Essai n° 79 :

Cet essai, illustrant l'art antérieur, met en oeuvre la suspension aqueuse de l'essai n° 30.

Essai n° 80 :

Cet essai, illustrant l'invention, met en oeuvre la suspension aqueuse de l'essai n° 52.

Essai n° 81 :

Cet essai, illustrant l'invention, met en oeuvre la suspension aqueuse de l'essai n° 53.

Essai n° 82 :

Cet essai, illustrant l'invention, met en oeuvre la suspension aqueuse de l'essai n° 54.

Essai n° 83 :

Cet essai, illustrant l'invention, met en oeuvre la suspension aqueuse de l'essai n°55.

Essai n° 84 :

Cet essai, illustrant l'art antérieur, met en oeuvre la suspension aqueuse de l'essai n° 23.
Il est à noter que dans cet essai la méthode utilisée pour mesurer l'homogénéité macroscopique de la suspension est différente de celle des essais précédents.
En effet, le dosage ne se fait pas par complexométrie mais par analyse RFA qui consiste à prendre 0,2 g de l'échantillon sec que l'on mélange avec 1,625 g de tétraborate de lithium que l'on chauffe jusqu'à la température de fusion pour obtenir un disque que l'on passe dans un appareil XRF 9400 de la société ARL (Suisse) pour la détermination des éléments par lecture des oxydes présents et calcul subséquent du kaolin présent.
Tous les résultats expérimentaux sont consignés dans le tableau 1 suivant.

- TABLEAU 1-

| | ESSAI n° | HOMOGENEITE % $CaCO_3$ en surface % $CaCO_3$ au fond |
|---|---|---|
| Art antérieur | 56 | 93,4 - 14,9 |
| Invention | 57 | 72,5 - 74,8 |
| Invention | 58 | 73,0 - 75,5 |
| Invention | 59 | 73,7 - 73,7 |
| Invention | 60 | 73,4 - 73,9 |
| Invention | 61 | 73,9 - 73,2 |
| Invention | 62 | 74,9 - 76,6 |
| Invention | 63 | 75,7 - 75,2 |
| Invention | 64 | 75,3- 74,5 |
| Invention | 65 | 73,9 - 73,8 |
| Art antérieur | 66 | 74,7 - 63,9 |
| Invention | 67 | 74,4 - 73,4 |
| Art antérieur | 68 | 88,9 - 25,4 |
| Invention | 69 | 73,2 - 72,5 |
| Art antérieur | 70 | 90,2 - 37,1 |
| Invention | 71 | 83,1 - 83,5 |

(suite)

| | ESSAI n° | HOMOGENEITE % $CaCO_3$ en surface % $CaCO_3$ au fond |
|---|---|---|
| Art antérieur | 72 | 45,2 - 89,1 |
| Invention | 73 | 85,0 - 82,1 |
| Art antérieur | 74 | 29,6 - 85,5 |
| Invention | 75 | 81,7 - 80,5 |
| Art antérieur | 76 | 33,6 - 54,6 |
| Invention | 77 | 49,6 - 49,6 |
| Invention | 78 | 68,8 - 69,2 |
| Art antérieur | 79 | 91,9 - 32,5 |
| Invention | 80 | 74,8 - 74,1 |
| Invention | 81 | 74,6 - 73,6 |
| Invention | 82 | 74,4 - 75,4 |
| Invention | 83 | 70,3 - 72,7 |
| Art antérieur | 84 | 23,0 - 2,0 * |
| * % kaolin en surface - % kaolin au fond | | |

La lecture du tableau 1 permet de constater que les suspensions aqueuses contenant des compositions composites co-structurées selon l'invention possèdent une teneur en charges présentant au moins un site hydrophile plus homogène en différents points que celle contenant les simples mélanges de l'art antérieur.

EXEMPLE 7 :

Cet exemple concerne la mise en évidence de la formation de la co-structure ou co-adsorption par la mesure et la comparaison de la viscosité et de l'homogénéité des différentes sauces de couchage papetières obtenues.

Dans ce but, on prépare les sauces de couchage (essais n° 85 à 94) en mélangeant dans l'eau, les compositions composites de charges ou pigments à tester avec 100 parts de composition à tester à 65 % en matière sèche 12,5 parts d'un latex styrène-butadiène carboxylé commercialisé sous le nom
DL 950 par la société Dow Chemical
et une quantité d'eau nécessaire pour obtenir une teneur en matière sèche de 40 % pour les essais n° 85 à 92, et une teneur en matière sèche de l'ordre de 20 % pour les essais n° 93 et 94.

Les sauces de couchage ainsi préparées sont alors soumises aux mesures de viscosités Brookfield à température ambiante à 20 tours/minute et à 100 tours par minute au moyen d'un viscosimètre Brookfield type DVII équipé du mobile adéquat.

Elles font ensuite l'objet du test d'homogénéité avec le même mode opératoire que celui de l'exemple précédent.

Essai n°85 :

Cet essai, illustrant une sauce de couchage de l'invention, met en oeuvre la suspension aqueuse de la composition composite selon l'essai n° 2.

Essai n° 86 :

Cet essai, illustrant une sauce de couchage de l'art antérieur, met en oeuvre la suspension aqueuse du mélange de l'essai n° 1.

Essai n° 87 :

Cet essai, illustrant une sauce de couchage selon l'invention, met en oeuvre la suspension aqueuse de la composition composite selon l'essai n° 4.

Essai n° 88 :

Cet essai, illustrant une sauce de couchage de l'art antérieur, met en oeuvre la suspension aqueuse du mélange de l'essai n° 3.

Essai n° 89 :

Cet essai, illustrant une sauce de couchage selon l'invention, met en oeuvre la suspension aqueuse de la composition composite selon l'essai n° 6.

Essai n° 90 :

Cet essai, illustrant une sauce de couchage de l'art antérieur, met en oeuvre la suspension aqueuse du mélange de l'essai n° 5.

Essai n° 91 :

Cet essai, illustrant une sauce de couchage selon l'invention, met en oeuvre la suspension aqueuse de la composition composite selon l'essai n° 8.

Essai n° 92 :

Cet essai, illustrant une sauce de couchage de l'art antérieur, met en oeuvre la suspension aqueuse du mélange de l'essai n° 7.

Essai n° 93 :

Cet essai, illustrant une sauce de couchage selon l'invention, met en oeuvre la suspension aqueuse de la composition composite selon l'essai n° 10:

Essai n° 94 :

Cet essai, illustrant une sauce de couchage de l'art antérieur, met en oeuvre la suspension aqueuse du mélange de l'essai n° 9.

Tous les résultats expérimentaux sont consignés dans le tableau 2 suivant, la consistance des sauces de couchage de chacun des essais étant déterminée par l'introduction d'une spatule contenant lesdites sauces.

- TABLEAU 2 -

| | ESSAI n° | VISCOSITE en mPa.s (20 T/mn) | VISCOSITE en mPa.s (100 T/mn) | CONSISTANCE | HOMOGENEITE % $CaCO_3$ en surface % $CaCO_3$ au fond |
|---|---|---|---|---|---|
| Invention | 85 | 190 | 66 | Mou | 63,5 - 63,1 |
| Art antérieur | 86 | 14 | 24 | Dur | 76,1 - 34,8 |
| Invention | 87 | 765 | 180 | Mou | 62,6 - 63,0 |
| Art antérieur | 88 | 110 | 60 | Moyennement dur | 75,5 - 22,3 |
| Invention | 89 | 75 | 50 | Mou | 61,2 - 64,1 |
| Art antérieur | 90 | 16 | 29 | Dur | 65,8-48,5 |
| Invention | 91 | 242 | 88 | Mou | 64,1 - 64,4 |
| Art antérieur | 92 | 18 | 20 | Dur | 68,0 - 23,0 |
| Invention | 93 | 885 | 217 | Mou | 62,6 - 63,3 |
| Art antérieur | 94 | 55 | 47 | Moyennement dur | 66,4 - 50,5 |

La lecture du tableau 2 permet de constater que les sauces de couchage selon l'invention contenant les suspensions aqueuses des compositions composites co-structurées selon l'invention possèdent un aspect mou et une viscosité Brookfield plus élevée que celle des simples mélanges comparatifs de l'art antérieur illustrant ainsi la co-structuration des charges ou pigments. On peut également voir qu'elles possèdent une teneur en charges présentant au moins un site hydrophile plus homogène en différents points des sauces que celle contenant les simples mélanges de l'art antérieur.

EXEMPLE 8 :

Cet exemple concerne la mesure du comportement rhéologique des différentes compositions aqueuses préparées selon le mode opératoire de l'exemple 1.

Le comportement rhéologique des différentes suspensions aqueuses ainsi préparées selon le mode opératoire de l'exemple 1 est mesuré, à 20°C, à l'aide d'un viscoélasticimètre Stress Tech® de la société Reologica Instruments AB (Suède) équipé de cylindres coaxiaux CC25.

Le mode opératoire pour la mesure du comportement rhéologique de la suspension est identique pour chacun des essais, à savoir pour chaque essai, on injecte dans le cylindre du viscoélasticimètre un échantillon de la suspension à tester et on lui applique une pré-contrainte de 10 Pa pendant 12 secondes puis après 180 secondes d'attente, on lui applique une contrainte progressant linéairement de 0,025 Pa à 20 Pa en 100 secondes et 40 intervalles.

La limite d'écoulement, correspondant à la contrainte appliquée à la suspension pour rompre les liaisons internes et obtenir une suspension dont la viscosité diminue, est déterminée par la valeur maximale de la courbe viscosité en Pa.s en fonction de la contrainte en Pa.

Essai n° 95 :

Cet essai, illustrant l'invention, met en oeuvre la suspension aqueuse de la composition composite selon l'essai n° 2.

Essai n° 96 :

Cet essai, illustrant l'art antérieur, met en oeuvre la suspension aqueuse du mélange de l'essai n° 1.

Essai n° 97 :

Cet essai, illustrant l'invention, met en oeuvre la suspension aqueuse de la composition composite selon l'essai n° 4.

Essai n° 98 :

Cet essai, illustrant l'art antérieur, met en oeuvre la suspension aqueuse du mélange de l'essai n° 3.

Essai n° 99 :

Cet essai, illustrant l'invention, met en oeuvre la suspension aqueuse de la composition composite selon l'essai n° 6.

Essai n° 100 :

Cet essai, illustrant l'art antérieur, met en oeuvre la suspension aqueuse du mélange de l'essai n° 5.

Essai n° 101 :

Cet essai, illustrant l'invention, met en oeuvre la suspension aqueuse de la composition composite selon l'essai n° 8.

Essai n° 102 :

Cet essai, illustrant l'art antérieur, met en oeuvre la suspension aqueuse du mélange de l'essai n° 7.

Essai n° 103 :

Cet essai, illustrant l'invention, met en oeuvre la suspension aqueuse de la composition composite selon l'essai n° 10.

Essai n° 104:

Cet essai, illustrant l'art antérieur, met en oeuvre la suspension aqueuse du mélange de l'essai n° 9.

Essai n° 105 :

Cet essai, illustrant l'invention, met en oeuvre la suspension aqueuse de la composition composite selon l'essai n° 12.

Essai n° 106 :

Cet essai, illustrant l'art antérieur, met en oeuvre la suspension aqueuse du mélange de l'essai n° 11.

Essai n° 107 :

Cet essai, illustrant l'invention, met en oeuvre la suspension aqueuse de la composition composite selon l'essai n° 14.

Essai n° 108 :

Cet essai, illustrant l'art antérieur, met en oeuvre la suspension aqueuse du mélange de l'essai n° 13.

Essai n° 109 :

Cet essai, illustrant l'art antérieur, met en oeuvre la suspension aqueuse du mélange de l'essai n° 15.

Essai n° 110 :

Cet essai, illustrant l'invention, met en oeuvre la suspension aqueuse de la composition composite selon l'essai n° 16.

Essai n° 111 :

Cet essai, illustrant l'art antérieur, met en oeuvre la suspension aqueuse du mélange de l'essai n° 17.

Essai n°112 :

Cet essai, illustrant l'invention, met en oeuvre la suspension aqueuse de la composition composite selon l'essai n° 18.

Essai n° 113 :

Cet essai, illustrant l'invention, met en oeuvre la suspension aqueuse de la composition composite selon l'essai n° 41.

Essai n° 114 :

Cet essai, illustrant l'art antérieur, met en oeuvre la suspension aqueuse du mélange de l'essai n° 42.

Essai n° 115 :

Cet essai, illustrant l'invention, met en oeuvre la suspension aqueuse de la composition composite selon l'essai n° 52.

Essai n° 116 :

Cet essai, illustrant l'invention, met en oeuvre la suspension aqueuse de la composition composite selon l'essai n° 53.

Essai n° 117 :

Cet essai, illustrant l'invention, met en oeuvre la suspension aqueuse de la composition composite selon l'essai n° 54.

Essai n° 118 :

Cet essai, illustrant l'invention, met en oeuvre la suspension aqueuse de la composition composite selon l'essai n° 55.

Tous les résultats expérimentaux sont consignés dans le tableau 3 suivant :

- TABLEAU 3 -

| | ESSAI n° | VISCOSITE en Pa.s | LIMITE D'ECOULEMENT en Pa |
|---|---|---|---|
| Invention | 95 | 642 | 3,072 |
| Art antérieur | 96 | 6,90 | 0,04465 |
| Invention | 97 | 164 | 0,9573 |
| Art antérieur | 98 | 1,49 | 0,03728 |
| Invention | 99 | 14 700 | 8,141 |
| Art antérieur | 100 | 0,527 | 0,03056 |
| Invention | 101 | 235 | 0,5842 |
| Art antérieur | 102 | 3,07 | 0,02965 |
| Invention | 103 | 1330 | 1,708 |
| Art antérieur | 104 | 38,4 | 0,3594 |
| Invention | 105 | 286 | 0,709 |
| Art antérieur | 106 | 12,32 | 0,079 |
| Invention | 107 | 2157 | 4,824 |
| Art antérieur | 108 | 4,81 | 0,102 |
| Art antérieur | 109 | 1,56 | 0,047 |
| Invention | 110 | 92 | 0,445 |
| Art antérieur | 111 | 43,2 | 0,099 |
| Invention | 112 | 589 | 0,336 |
| Invention | 113 | 938 | 1,580 |
| Art antérieur | 114 | 40,6 | 0,185 |
| Invention | 115 | 222 | 0,395 |
| Invention | 116 | 8,6 | 0,149 |
| Invention | 117 | 339 | 0,741 |
| Invention | 118 | 9,1 | 0,198 |

La lecture du tableau 3 permet de constater que les suspensions aqueuses des compositions composites co-structurées selon l'invention possèdent une limite d'écoulement supérieure à celle des simples mélanges comparatifs de l'art antérieur, caractéristique de suspensions présentant une bonne stabilité.

EXEMPLE 9 :

Cet exemple concerne la mise en évidence de la qualité d'imprimabilité des différentes sauces de couchage papetières obtenues dans l'exemple 7.

Ce test d'imprimabilité dénommé ISIT (Ink Surface Interaction Test) est basé sur une installation d'impression munie d'un dispositif de création et de mesure de la force nécessaire pour séparer un disque de décollement, d'un film d'encre d'impression. Cette installation constituée d'une part par ce dispositif de création et de mesure de force et d'autre part par un disque encreur tournant au dessus de la feuille de papier à tester est commercialisée sous le nom « Ink Surface Interaction Tester » par la société SeGan Ltd.

Pour ce faire, on prépare tout d'abord les différentes feuilles de papier à tester en appliquant les différentes sauces de couchage à tester sur ces feuilles de papier à l'aide de la coucheuse de laboratoire Erichsen Modèle 624 de la société Erichsen GmbH+Co. KG (Allemagne) équipées de lames roulantes échangeables.

Le papier ainsi couché à 7,5 g/$m^2$ et à tester est fixé sur un rouleau muni d'une bande adhésive double face. L'application d'une encre offset est effectuée par la mise en contact du disque encreur d'une largeur de 25 mm lors d'une rotation de 180°. La vitesse et la pression d'impression sont ajustables et sont de l'ordre de 0,5 m/s et 50 kg respectivement. Le volume d'encre est dans les conditions standards de 0,3 $cm^3$ résultant ainsi en une épaisseur d'environ 1 g/$m^2$ d'encre sur la feuille de papier à tester.

Le procédé d'impression est suivi d'une séquence de mesures répétées de la force de décollement, à des intervalles de temps pré-sélectionnés dépendants de ce temps mis pour séparer ce disque de décollement (de même dimension que le disque d'impression) du film d'encre.

Un revêtement en caoutchouc nitrile de qualité impression offset est habituellement utilisé pour le disque de décollement mais tout matériau équivalent peut être employé.

La force de contact entre le disque de décollement et l'encre est mesurée par un système générant une force électro-magnétique. On ajuste l'amplitude et la durée de la force de décollement pour aboutir à une adhésion uniforme entre la surface du film et le disque de décollement au bout de 3 secondes. Une faible rotation de la feuille de papier pendant l'application de la force électro-magnétique permet d'assurer un contact intime et une continuité du film d'encre. A l'arrêt de la force magnétique, le disque de décollement se rétracte du film imprimé par la force d'un ressort tendu, force suffisante pour séparer le disque du film d'encre. Une jauge de contrainte, fixée entre le disque de décollement et le ressort, génère un signal qui est enregistré comme la force de décollement.

La séquence est automatiquement répétée pour 13 cycles.

Au premier et au treizième cycle les densités d'impression sont mesurées à l'aide d'un densitomètre Gretag D 186.

Ce mode opératoire est utilisé pour chacune des sauces de couchage à tester, ainsi :

Essai n° 119:

Illustrant l'invention, met en oeuvre la sauce de couchage selon l'essai n° 85.

Essai n° 120 :

Illustrant l'art antérieur, met en oeuvre la sauce de couchage de l'essai n° 86.

Essai n° 121 :

Illustrant l'invention, met en oeuvre la sauce de couchage selon l'essai n° 87.

Essai n° 122 :

Illustrant l'art antérieur, met en oeuvre la sauce de couchage de l'essai n° 88.

Essai n° 123 :

Illustrant l'invention, met en oeuvre la sauce de couchage selon l'essai n° 89.

Essai n° 124 :

Illustrant l'art antérieur, met en oeuvre la sauce de couchage de l'essai n° 90.

Essai n° 125 :

Illustrant l'invention, met en oeuvre la sauce de couchage selon l'essai n° 91.

Essai n° 126:

Illustrant l'art antérieur, met en oeuvre la sauce de couchage de l'essai n° 92.

Essai n° 127:

Illustrant l'invention, met en oeuvre la sauce de couchage selon l'essai n° 93.

Essai n° 128 :

Illustrant l'art antérieur, met en oeuvre la sauce de couchage de l'essai n° 94.

Tous les résultats expérimentaux sont consignés dans les tableaux 4 et 5 suivants et les graphes 1 à 5 rassemblés à la fin de la présente demande.

Le tableau 4 contient les résultats de la valeur de la force de décollement en fonction du temps alors que le tableau 5 contient les valeurs de densité d'impression des essais n° 119 à 122.

Les graphes 1 à 5 sont représentatifs de la force à appliquer pour décoller le disque du film après impression en fonction du temps et peuvent être interprétés en prenant en compte les trois phases suivantes:

(i) le temps de montée,
qui est principalement relatif à la rapidité d'absorption et de pénétration de l'encre lors du contact initial de l'encre sur la surface à imprimer. La microporosité et la mouillabilité de cette surface sont les facteurs majeurs pour le temps de montée de cette force. Plus ce temps de montée à la valeur maximale de la force est long, mieux le liant de l'encre est absorbé, moins le film d'encre est brisé, meilleure est l'adhésion entre l'encre et le papier, meilleur est donc le résultat.

(ii) La valeur maximale de la force de décollement,
qui mesure d'une part l'adhésion de la couche d'encre immobilisée en contact, le substrat d'impression et d'autre part la cohésion avec l'encre contenue à la surface du substrat. Ainsi, plus cette valeur maximale de la force de décollement est élevée pour une cohésion constante, meilleure est l'adhésion et meilleur est le rendu d'impression.

(iii) Le temps de diminution de la force,
qui traduit le séchage de l'encre.
Plus cette diminution est lente, plus le séchage de l'encre est lent, moins il y a de rupture dans la structure de l'encre, meilleur est le rendu d'impression.

- TABLEAU 4 -

| | Essai n° 119 Invention | Essai n° 120 Art antérieur | Essai n° 121 Invention | Essai n° 122 Art antérieur | Essai n° 123 Invention | Essai n° 124 Art antérieur | Essai n° 125 Invention | Essai n° 126 Art antérieur | Essai n° 127 Invention | Essai n° 128 Art antérieur |
|---|---|---|---|---|---|---|---|---|---|---|
| Temps : 5 secondes | Force : 1,89 | Force : 3,93 | Force : 2,73 | Force : 3,74 | Force : 3,94 | Force : 4,32 | Force ; 2,82 | Force 2,70 | Force : 3,29 | Force : 4,67 |
| Temps : 15 secondes | Force : 5,22 | Force : 6,39 | Force : 5,52 | Force : 5,98 | Force : 6,61 | Force : 5,34 | Force : 5,08 | Force : 4,99 | Force 6,60 | Force 6,55 |
| Temps : 26 secondes | Force : 6,71 | Force : 6,11 | Force : 6,46 | Force : 5,89 | Force : 6,77 | Force : 527 | Force : 6,30 | Force : 5,39 | Force ; 7,38 | Force : 6,08 |
| Temps : 37 secondes | Force : 7,19 | Force : 5,68 | Force : 6,85 | Force : 5,52 | Force : 6,36 | Force : 4,84 | Force : 6,37 | Force : 5,28 | Force : 7,22 | Force : 5,30 |
| Temps : 57 secondes | Force : 7,21 | Force : 5,45 | Force : 6,84 | Force : 5,50 | Force : 5,63 | Force : 4,63 | Force : 6,10 | Force : 4,63 | Force : 6,19 | Force : 3,74 |
| Temps : 78 secondes | Force : 6,77 | Force : 4,61 | Force : 6,64 | Force : 4,88 | Force : 5,44 | Force : 3,89 | Force : 5,46 | Force : 3,04 | Force : 5,00 | Force : 3,07 |
| Temps : 98 secondes | Force : 6,06 | Force : 4,41 | Force : 6,37 | Force : 4,71 | Force : 4,56 | Force : 2,95 | Force : 5,05 | Force : 2,73 | Force : 4,00 | Force : 2,10 |
| Temps : 139 secondes | Force : 5,34 | Force : 3,25 | Force : 5,38 | Force : 4,30 | Force : 3,51 | Force : 2,42 | Force : 4,16 | Force : 1,65 | Force : 3,25 | Force : 1,25 |
| Temps : 179 secondes | Force : 5,07 | Force : 2,27 | Force : 4,66 | Force : 3,04 | Force : 2,59 | Force : 2,09 | Force : 3,15 | Force : 0,93 | Force : 1,73 | Force : 0,79 |
| Temps : 220 secondes | Force : 4,54 | Force : 1,67 | Force : 3,80 | Force : 2,22 | Force : 2,37 | Force : 1,57 | Force : 2,78 | Force : 1,39 | Force : 1.36 | Force : 0,72 |
| Temps : 281 secondes | Force : 3,67 | Force : 1,02 | Force : 3,22 | Force : 1,42 | Force : 2,03 | Force : 0,99 | Force : 2,24 | Force : 1,32 | Force : 1,16 | Force : 0,64 |

(suite)

| | Essai n° 119 Invention | Essai n° 120 Art antérieur | Essai n° 121 Invention | Essai n° 122 Art antérieur | Essai n° 123 Invention | Essai n° 124 Art antérieur | Essai n° 125 Invention | Essai n° 126 Art antérieur | Essai n° 127 Invention | Essai n° 128 Art antérieur |
|---|---|---|---|---|---|---|---|---|---|---|
| Temps : 341 secondes | Force : 3,12 | Force : 0,88 | Force : 2,67 | Force : 1,01 | Force : 1,21 | Force : 0,90 | Force : 1,55 | Force : 1,19 | Force : 0,71 | Force : 0,59 |
| Temps : 402 secondes | Force : 3,23 | Force : 0,92 | Force : 2,43 | Force : 0,86 | Force : 1,30 | Force : 0,89 | Force : 1,56 | Force : 1,07 | Force : 0,72 | Force : 0,66 |

- TABLEAU 5 -

| | ESSAI n° | Densité Impression 1^er cycle | Densité Impression 13^ème cycle |
|---|---|---|---|
| Invention | 119 | 1,58 | 1,05 |
| Art antérieur | 120 | 1,49 | 0,97 |
| Invention | 121 | 1,52 | 1,05 |
| Art antérieur | 122 | 1,48 | 0,94 |

La lecture du tableau 4 et des graphes n° 1 à 5 permet de constater que les sauces de couchage selon l'invention ont des temps de montée et de descente les plus lents, ainsi que les valeurs de force de décollement les plus élevées, ce qui signifie une meilleure imprimabilité en terme d'adhésion, de brillance et de rendu d'impression.

La lecture du tableau 5 permet de constater que les sauces de couchage selon l'invention présentent des valeurs de densité d'impression supérieures à celles des sauces de couchages comparatives de l'art antérieur.

EXEMPLE 10 :

Cet exemple concerne la mesure d'opacité et plus précisément la détermination du coefficient de diffusion de la lumière S des différentes sauces de couchage.

Le mode opératoire de la détermination du coefficient de la lumière S, bien connu de l'homme du métier est le suivant :

Pour chaque essai, on dispose d'une feuille de papier sans bois que l'on couche avec la sauce de couchage à tester.

Avant d'être couchée et pour chaque essai, cette feuille de papier de dimension 10 cm x 6 cm et avec un poids spécifique de 75,5 g/m$^2$ est pesée puis soumise à un rayonnement lumineux de longueur d'onde égale à 457 nm sur une plaque noire au moyen d'un spectrophotomètre Elrepho 2000 de Datacolor (Suisse) pour déterminer l'indice de réflexion de base $R_b$.

Chacune des sauces de couchage à tester est alors appliquée sur cette feuille de papier prépesée à l'aide d'une coucheuse de laboratoire à lames roulantes échangeables commercialisée sous la référence Mod. 624 par la société Erichsen (Allemagne).

Chaque feuille de papier ainsi couchée à 7,5 g/m$^2$ est alors soumise à un rayonnement lumineux de longueur d'onde égale à 457 nm au moyen d'un spectrophotomètre Elrepho 2000 de Datacolor (Suisse) sur plaque noire pour déterminer l'indice de réflexion $R_0$ et sur une pile de feuilles de papier non couchée pour déterminer l'indice de réflexion $R_1$, r étant l'indice de réflexion de la pile de feuilles de papier non couché.

On détermine alors l'indice de réflexion $R_{sc}$ de la couche seule, sur fond noir, par la formule :

$$R_{sc} = \frac{R_1.R_b - R_0.r}{(R_1 - R_0).r\ R_0 + R_b - r}$$

ainsi que la transmittance $T_{sc}$ de la couche

$$T_{sc}^2 = \frac{(R_0 - R_{sc})\ (1 - R_{sc}\ R_b)}{R_b}$$

aboutissant à une valeur théorique de réflexion $R_x$ pour une couche d'épaisseur infinie donnée par la formule :

$$\frac{1-T_{sc}^2+R_{sc}^2}{R_{sc}} = \frac{1+R_\infty^2}{R_\infty}$$

De cette formule le coefficient de diffusion S caractéristique de l'opacité peut être calculée sachant que, pour un poids de couche P,

$$S.P. = \frac{1}{b} \coth^{-1} \frac{(1-a\,R_{sc})}{b\,R_{sc}}$$

$$a = 0{,}5\left(\frac{1}{R_\infty} + R_\infty\right)$$

avec

$$b = 0{,}5\left(\frac{1}{R_\infty} - R_\infty\right)$$

<u>Essai n° 129</u> :

Cet essai, illustrant l'art antérieur, met en oeuvre la sauce de couchage de l'essai n° 86.

<u>Essai n° 130</u> :

Cet essai, illustrant l'invention, met en oeuvre la sauce de couchage de l'essai n° 85.

<u>Essai n° 131</u> :

Cet essai, illustrant l'art antérieur, met en oeuvre la sauce de couchage de l'essai n° 88.

<u>Essai n° 132</u> :

Cet essai, illustrant l'invention, met en oeuvre la sauce de couchage de l'essai n° 87.
Tous les résultats sont consignés dans le tableau 6 suivant:

- TABLEAU 6 -

| | ART ANTERIEUR | INVENTION | ART ANTERIEUR | INVENTION |
|---|---|---|---|---|
| ESSAI n° | 129 | 130 | 131 | 132 |
| S en $m^2$/kg | 143 | 157 | 104 | 136 |

La lecture du tableau 6 permet de constater que les sauces de couchage selon l'invention ont un coefficient de diffusion de la lumière S supérieur à celui des sauces de couchage comparatives de l'art antérieur.

EXEMPLE 11 :

Cet exemple concerne la mesure directe d'opacité et de la blancheur des sauces de couchage selon la norme TAPPI T452 ISO 2470.

Pour chaque essai, on dispose d'une feuille de papier sans bois de dimension 10 cm x 6 cm avec un poids spécifique de 75,5 $g/m^2$ que l'on couche avec la sauce de couchage à tester à l'aide d'une coucheuse de laboratoire à lames roulantes échangeables commercialisée sous la référence Mod. 624 par la société Erichsen (Allemagne).

Chaque feuille de papier ainsi couchée à 7,5 $g/m^2$ est alors soumise à un rayonnement lumineux de longueur d'onde égale à 457 nm au moyen d'un spectrophotomètre Elrepho 2000 de Data Color (Suisse) pour déterminer l'opacité et la blancheur.

Cet exemple concerne aussi la mesure de la brillance. Cette mesure de la brillance est effectuée sur les mêmes feuilles de papier couchées que celles utilisées pour les mesures directes d'opacité et de blancheur.

Cette méthode consiste à passer la feuille de papier couché dans le brillancemètre de laboratoire LGDL - 05/2 (Lehmann Messtechnik AG, Suisse) qui mesure la brillance 75° TAPPI selon Lehmann.

Essai n° 133 :

Cet essai, illustrant l'art antérieur, met en oeuvre la sauce de couchage de l'essai n° 88.

Essai n° 134 :

Cet essai, illustrant l'invention, met en oeuvre la sauce de couchage de l'essai n° 87.

Essai n° 135 :

Cet essai, illustrant l'art antérieur, met en oeuvre la sauce de couchage de l'essai n° 92.

Essai n° 136 :

Cet essai, illustrant l'invention, met en oeuvre la sauce de couchage de l'essai n° 91.

Essai n° 137 :

Cet essai, illustrant l'art antérieur, met en oeuvre la sauce de couchage de l'essai n° 94.

Essai n° 138 :

Cet essai, illustrant l'invention, met en oeuvre la sauce de couchage de l'essai n° 93.

Les résultats expérimentaux des mesures d'opacité sont consignés dans le tableau 7 suivant:

- TABLEAU 7 -

| | ART ANTERIEUR | INVENTION |
|---|---|---|
| ESSAI n° | 133 | 134 |
| OPACITE | 91,1% | 92,2% |

Les résultats expérimentaux des mesures de blancheur sont consignés dans le tableau 8 suivant :

- TABLEAU 8 -

| | ART ANTERIEUR | INVENTION |
|---|---|---|
| ESSAI n° | 135 | 136 |
| BLANCHEUR | 84,8 % | 87,6 % |

Les résultats expérimentaux des mesures de brillance sont consignés dans le tableau 9 suivant :

- TABLEAU 9 -

| | ART ANTERIEUR | INVENTION |
|---|---|---|
| ESSAI n° | 137 | 138 |
| BRILLANCE | 41,4 % | 48,6 % |

La lecture des tableaux 7 à 9 permet de constater que les sauces de couchages selon l'invention possèdent une opacité, une blancheur et une brillance supérieures à celles des sauces de couchage comparatives de l'art antérieur.

EXEMPLE 12 :

Cet exemple concerne la mesure d'opacité selon la norme DIN 53146 et de blancheur des feuilles de papier contenant, dans la masse, les compositions de charge de masse non couchée de l'invention contenant les compositions composites selon l'invention et leurs comparaisons avec celles contenant les simples suspensions des mélanges comparatifs de l'art antérieur.
Pour ce faire, on réalise les feuilles de papier à partir d'une pulpe de cellulose de degré SR 23 contenant une pâte au sulfate sans bois et des fibres constituées à 80 % de bouleau et 20 % de pin. On dilue alors 45 g sec de cette pulpe dans 10 litres d'eau en présence de environ 15 g sec de la composition de charges à tester pour obtenir expérimentalement une teneur en charge de 20 %. Après 15 minutes d'agitation et l'ajout de 0,06 % en poids sec par rapport au poids sec de papier d'un agent rétenteur du type polyacrylamide, on forme une feuille de grammage égal à 75 g/m2 et chargée à 20 %. Le dispositif mis en oeuvre pour former la feuille est un système Rapid-Köthen modèle 20.12 MC de Haage.
Les feuilles ainsi formées sont séchées pendant 400 secondes à 92°C et un vide de 940 mbar. La teneur en charge est contrôlée par analyse des cendres.
On détermine alors les différentes valeur d'opacité et de blancheur selon le même mode opératoire que celui de l'exemple précédent.
Les différents essais sont les suivants.

Essai n° 139 :

Cet essai, illustrant l'art antérieur, met en oeuvre le mélange selon l'essai n° 1.

Essai n° 140 :

Cet essai, illustrant l'invention, met en oeuvre la composition composite selon l'essai n° 2.

Essai n° 141 :

Cet essai, illustrant l'art antérieur, met en oeuvre le mélange selon l'essai n° 3.

Essai n° 142 :

Cet essai, illustrant l'invention, met en oeuvre la composition composite selon l'essai n° 4.
Les résultats expérimentaux des mesures de blancheur sont consignés dans le tableau 10 suivant :

- TABLEAU 10 -

| | ART ANTERIEUR | INVENTION |
|---|---|---|
| ESSAI n° | 139 | 140 |
| BLANCHEUR | 86,9 | 87,7 |

Les résultats expérimentaux des mesures d'opacité sont consignés dans le tableau 11 suivant:

- TABLEAU 11-

| | ART ANTERIEUR | INVENTION |
|---|---|---|
| ESSAI n° | 141 | 142 |
| OPACITE | 88,7 | 90,3 |

La lecture des tableaux 10 et 11 permet de constater que les feuilles chargées avec les compositions composites co-structurées selon l'invention ont une opacité et une blancheur supérieure à celles chargées avec les simples mélanges correspondants de l'art antérieur.

EXEMPLE 13 :

Cet exemple concerne la mesure d'opacité et plus précisément la détermination du coefficient de diffusion de la lumière S d'une formulation de peinture aqueuse contenant essentiellement, outre l'eau, 100 parts de la composition à tester à 65 % en matière sèche et 9,8 parts d'un liant dispersion polymère styrène-acrylique.

Ce coefficient S est mesuré avec le même mode opératoire que celui de l'exemple 10, à l'exception du support, qui au lieu d'être une feuille de papier est une plaque d'aluminium.

Les résultats obtenus sont en tous points identiques à ceux des essais n° 129 et 130, permettant de constater que les formulations de peinture selon l'invention ont un coefficient de diffusion de la lumière S supérieur, et donc une opacité supérieure, à celui d'une formulation de peinture de l'art antérieur.

Avec des résultats de l'exemple 10, l'homme du métier s'attendait au résultat de l'exemple 13. En effet, ce coefficient S, comme le confirme le calcul décrit dans l'exemple 10, est indépendant du support qu'il soit une feuille de papier, une plaque de ciment ou encore une plaque métallique et ne dépend que de la constitution de la composition du revêtement, donc que de la composition de la sauce de couchage papetière ou encore de la composition de la formulation peinture appliquée.

## Revendications

**1.** Composition composite de charges ou pigments minéraux ou organiques **caractérisée en ce qu'**elle contient :

a) au moins deux charges ou pigments minéraux ou organiques dont au moins l'une présente une surface dotée d'au moins un site hydrophile et au moins l'autre présente une surface dotée d'au moins un site organophile
b) au moins un agent liant choisi parmi les polymères et/ou copolymères acryliques ou vinyliques ou les polycondensats ou les produits de polyaddition tels que les polymères et/ou copolymères, dans leur état totalement acide ou partiellement neutralisé ou totalement neutralisé, de l'un au moins des monomères tels que l'acide acrylique et/ou méthacrylique, itaconique, crotonique, fumarique, anhydride maléique ou encore, isocrotonique, aconitique, mésaconique, sinapique, undécylénique, angélique et/ou leurs esters respectifs, l'acide acrylamido méthyl propane sulfonique, l'acroléine, l'acrylamide et/ou méthacrylamide, le méthacrylamido propyl triméthyl ammonium chlorure ou sulfate, le méthacrylate de trimethyl ammonium éthyl chlorure ou sulfate, ainsi que leurs homologues en acrylate et en acrylamide quaternisés ou non et/ou le diméthyldiallylchlorure, la vinylpyrrolidone ou bien encore un agent liant choisi parmi les acides gras linéaires ou ramifiés, ou les alcools gras linéaires ou ramifiés, ou les amines grasses linéaires ou ramifiées ou cycliques, et saturés ou non ou bien encore un agent liant choisi parmi les sels quaternaires préférentiellement à chaînes grasses linéaires ou ramifiées d'origine végétale ou non.

et **en ce que** les charges ou pigments minéraux ou organiques sont co-structurés ou co-adsorbés.

**2.** Composition composite de charges ou pigments minéraux ou organiques selon la revendication 1 **caractérisée en ce qu'**elle est une composition aqueuse.

**3.** Composition composite de charges ou pigments minéraux ou organiques selon la revendication 1 **caractérisée en ce qu'**elle est une composition non aqueuse.

**4.** Composition composite de charges ou pigments minéraux ou organiques selon la revendication 1 **caractérisée en ce qu'**elle est une composition sèche.

5. Composition composite selon l'une quelconque des revendications 1 à 4 **caractérisée en ce que** l'agent liant est choisi parmi les polymères et/ou copolymères acryliques ou vinyliques, dans leur état totalement acide ou partiellement neutralisé ou totalement neutralisé, obtenus par polymérisation, à l'état acide en présence de l'une au moins des particules minérales ou organiques de la composition composite et éventuellement en présence de l'agent liant selon la revendication 7, de l'un au moins des monomères tels que l'acide acrylique et/ou méthacrylique, itaconique, crotonique, fumarique, anhydride maléique ou encore, isocrotonique, aconitique, mésaconique, sinapique, undécylénique, angélique et/ou leurs esters respectifs, l'acide acrylamido méthyl propane sulfonique, l'acroléine, l'acrylamide et/ou méthacrylamide, le methacrylamido propyl triméthyl ammonium chlorure ou sulfate, le méthacrylate de triméthyl ammonium éthyl chlorure ou sulfate, ainsi que leurs homologues en acrylate et en acrylamide quaternisés ou non et/ou le diméthyldiallylchlorure, la vinylpyrrolidone ou bien encore tels que les acides gras insaturés linéaires ou ramifiés, ou les alcools gras insaturés linéaires ou ramifiés, ou les amines grasses insaturées linéaires ou ramifiées ou cycliques, ou bien les sels quaternaires préférentiellement à chaînes grasses insaturées linéaires ou ramifiées d'origine végétale ou non.

6. Composition composite selon l'une quelconque des revendications 1 à 5 **caractérisée en ce que** la ou les charges ou le ou les pigments minéraux ou organiques présentant une surface dotée d'au moins un site hydrophile sont choisis parmi les carbonates de calcium naturels comme la craie, la calcite, le marbre ou tout autre forme de carbonate de calcium naturel provenant notamment de procédés de recyclage, ou parmi le carbonate de calcium précipité, les dolomies, les hydroxydes d'aluminium cristallins ou amorphes, les silicates précipités naturels ou synthétiques, le sulfate de calcium, les dioxydes de titane, le blanc satin, les wollastonites, la huntite, les argiles calcinées provenant notamment de procédés de recyclage ou l'amidon ou encore choisis parmi les particules minérales ou organiques organophiles ayant subi un traitement physique ou chimique de manière à présenter au moins un site hydrophile.

7. Composition composite selon l'une quelconque des revendications 1 à 5 **caractérisée en ce que** la ou les charges ou le ou les pigments minéraux ou organiques présentant une surface dotée d'au moins un site organophile sont choisis parmi les talcs, les micas, les kaolins calcinés ou non, l'oxyde de zinc, les pigments de fer transparents, les pigments colorants, les pigments synthétiques à base de polystyrène, les résines urée-formol, le noir de carbone ou les fibres et farine de cellulose ou encore choisis parmi les particules minérales ou organiques hydrophiles ayant subi un traitement physique ou chimique de manière à présenter au moins un site organophile.

8. Composition composite selon l'une quelconque des revendications 1 à 7 **caractérisée en ce qu'**elle contient 0,1 % à 99,9 % en poids sec et préférentiellement 25% à 95% en poids sec, par rapport au poids sec total des charges ou pigments, de charges ou pigments minéraux ou organiques présentant une surface dotée d'au moins un site hydrophile et 99,9 % à 0,1 % en poids sec et préférentiellement entre 75% et 5% en poids sec, par rapport au poids sec total des charges ou pigments, de charges ou pigments minéraux ou organiques présentant une surface dotée d'au moins un site organophile.

9. Composition composite selon l'une quelconque des revendications 1 à 8 **caractérisée en ce qu'**elle contient 0,01 % à 10 % et préférentiellement 0,1 % à 1,5 % en poids sec de l'agent liant, par rapport au poids sec total des charges ou pigments.

10. Composition composite selon l'une quelconque des revendications 1 à 9 **caractérisée en ce qu'**elle est macroscopiquement homogène.

11. Composition composite selon l'une quelconque des revendications 1 à 9 **caractérisée en ce que** sa limite d'écoulement déterminée par la mesure du viscoélasticimètre Stress Tech® est supérieure et préférentiellement au moins quatre fois supérieure à celle du simple mélange de charges ou pigments correspondant.

12. Utilisation des compositions composites selon l'une quelconque des revendications 1 à 11 à la fabrication de suspensions aqueuses de charges ou pigments minéraux ou organiques, de sauces de couchage papetière et/ou à la fabrication du papier, à la masse et/ou à tout autre traitement de surface du papier.

13. Utilisation des compositions composites selon l'une quelconque des revendications 1 à 11 dans le domaine des peintures.

14. Utilisation des compositions composites selon l'une quelconque des revendications 1 à 11 dans le domaine des matières plastiques.

**15.** Suspension aqueuse de charges ou pigments minéraux ou organiques **caractérisée en ce qu'**elle contient une composition composite selon l'une quelconque des revendications 1 à 11.

**16.** Suspension aqueuse de charges ou pigments minéraux ou organiques selon la revendication 15 **caractérisée en ce qu'**elle est macroscopiquement homogène.

**17.** Suspension aqueuse de charges ou pigments minéraux ou organiques selon la revendication 15 **caractérisée en ce que** sa limite d'écoulement déterminée par la mesure du viscoélasticimètre Stress Tech® est supérieure et préférentiellement au moins quatre fois supérieure à celle du simple mélange de charges ou pigments correspondant.

**18.** Sauce de couchage **caractérisée en ce qu'**elle contient une composition composite selon l'une quelconque des revendications 1 à 14.

**19.** Sauce de couchage papetière selon la revendication 18 **caractérisée en ce qu'**elle est macroscopiquement homogène.

**20.** Sauce de couchage papetière selon la revendication 18 **caractérisée en ce que** sa limite d'écoulement déterminée par la mesure du viscoélasticimètre Stress Tech® est supérieure et préférentiellement au moins quatre fois supérieure à celle du simple mélange de charges ou pigments correspondant.

**21.** Sauce de couchage papetière selon l'une quelconque des revendications 18 à 20 **caractérisée en ce qu'**elle possède un coefficient de diffusion de la lumière S, supérieur à celui d'une sauce de couchage contenant les simples suspensions des mélanges correspondants.

**22.** Sauce de couchage papetière selon l'une quelconque des revendications 18 à 20 **caractérisée en ce qu'**elle possède une blancheur, déterminée selon la norme TAPPI T452 ISO 2470, supérieure à celle d'une sauce de couchage contenant les simples suspensions des mélanges correspondants.

**23.** Sauce de couchage papetière selon l'une quelconque des revendications 18 à 20 **caractérisée en ce qu'**elle possède une brillance, TAPPI 75° selon Lehmann, supérieure à celle d'une sauce de couchage contenant les simples suspensions des mélanges correspondants.

**24.** Sauce de couchage papetière selon l'une quelconque des revendications 18 à 20 **caractérisée en ce que** sa courbe, déterminée selon le test d'imprimabilité ISIT et représentative de la force de décollement en fonction du temps, possède des pentes de montée et de descente plus faibles que les sauces de couchage contenant les simples suspensions des mélanges correspondants et une valeur maximale de la force de décollement plus élevée.

**25.** Sauce de couchage papetière selon l'une quelconque des revendications 18 à 20 **caractérisée en ce qu'**elle possède une densité d'impression supérieure à celle d'une sauce de couchage contenant les simples suspensions des mélanges correspondants.

**26.** Composition de traitement de surface du papier, du bois, du métal, du plastique ou du ciment ou formulation de peinture aqueuse ou non aqueuse **caractérisée en ce qu'**elle contient une composition composite selon l'une quelconque des revendications 1 à 11.

**27.** Composition de traitement de surface du papier, du bois, du métal, du plastique ou du ciment ou formulation de peinture aqueuse ou non aqueuse selon la revendication 26 **caractérisée en ce qu'**elle est macroscopiquement homogène.

**28.** Composition de traitement de surface du papier selon la revendication 26 **caractérisée en ce que** sa limite d'écoulement déterminée par la mesure du viscoélasticimètre Stress Tech® est supérieure et préférentiellement au moins quatre fois supérieure à celle du simple mélange de charges ou pigments correspondant.

**29.** Formulation de peinture aqueuse ou non aqueuse selon la revendication 26 **caractérisée en ce qu'**elle possède un coefficient de diffusion de la lumière S, supérieur à celui d'une formulation de peinture contenant les simples suspensions des mélanges correspondants.

**30.** Composition de traitement de surface du papier selon l'une quelconque des revendications 26 à 28 **caractérisée**

**en ce que** sa courbe, déterminée selon le test d'imprimabilité ISIT et représentative de la force de décollement en fonction du temps, possède des pentes de montée et de descente plus faibles que les compositions de traitement de surface du papier contenant les simples suspensions des mélanges correspondants et une valeur maximale de la force de décollement plus élevée.

**31.** Composition de charge de masse non couchée **caractérisée en ce qu'**elle contient une composition composite selon l'une quelconque des revendications 1 à

**32.** Feuille de papier de base destinée à être couchée **caractérisée en ce qu'**elle contient la composition de charge de masse non couchée selon la revendication

**33.** Feuille de papier selon la revendication 32 **caractérisée en ce qu'**elle possède une opacité déterminée selon la norme DIN 53146, supérieure à celle d'une feuille de papier contenant les simples suspensions des mélanges correspondants.

**34.** Feuille de papier selon la revendication 32 **caractérisée en ce qu'**elle possède une blancheur déterminée selon la norme TAPPI T452 ISO 2470, supérieure à celle d'une feuille de papier contenant les simples suspensions des mélanges correspondants.

## Claims

**1.** A composite composition of mineral or organic fillers or pigments **characterised in that** it contains:

a) at least two mineral or organic fillers or pigments, at least one of which has a surface with at least one hydrophilic site and the other of which at least has a surface with at least one organophilic site
b) at least one binding agent chosen from among the acrylic or vinylic polymers and/or copolymers or the polycondensates or the products of polyaddition, such as the polymers and/or copolymers, in their completely acidic or partially neutralised or totally neutralised state, of one at least of the monomers such as acrylic and/or methacrylic acid, itaconic acid, crotonic acid, fumaric acid, maleic anhydride acid, or again isocrotonic acid, aconitic acid, mesaconic acid, sinapic acid, undecylenic acid, angelic acid and/or their respective esters, acrylamido methyl propane sulfonic acid, acrolein, acrylamide and/or methacrylamide, methacrylamido propyl trimethyl ammonium chloride or sulphate, methacrylate of trimethyl ammonium ethyl chloride or sulphate, together with their acrylate and acrylamide homologues, whether or not quaternised, and/or dimethyl diallyl chloride, vinylpyrrolidone or again a binding agent chosen from among the linear or branched fatty acids, or the linear or branched fatty alcohols, or the linear or branched or cyclic fatty amines, and whether or not saturated, or again a binding agent chosen from among the quaternary salts preferentially with linear or branched fatty chains, whether or not of vegetal origin.

and **in that** the mineral or organic fillers or pigments are co-structured or co-adsorbed.

**2.** A composite composition of mineral or organic fillers or pigments according to claim 1 **characterised in that** it is a water-based composition.

**3.** A composite composition of mineral or organic fillers or pigments according to claim 1 **characterised in that** it is a non-water-based composition.

**4.** A composite composition of mineral or organic fillers or pigments according to claim 1 **characterised in that** it is a dry composition.

**5.** A composite composition according to any of the claims 1 to 4 **characterised in that** the binding agent is chosen from among the acrylic or vinylic polymers and/or copolymers, in their totally acidic or partially neutralised or totally neutralised state, obtained by polymerisation, in the acid state in the presence of at least one of the mineral or organic particles of the composite composition and possibly in the presence of the binding agent according to claim 7, of at least one of the monomers such as acrylic and/or methacrylic acid, itaconic acid, crotonic acid, fumaric acid, maleic anhydride acid, or again isocrotonic acid, aconitic acid, mesaconic acid, sinapic acid, undecylenic acid, angelic acid and/or their respective esters, acrylamido methyl propane sulfonic acid, acrolein, acrylamide and/or methacrylamide, methacrylamido propyl trimethyl ammonium chloride or sulphate, methacrylate of trimethyl ammonium ethyl chloride or sulphate, together with their acrylate and acrylamide homologues, whether or not quaternised, and/or dimethyl diallyl chloride, vinylpyrrolidone or again such as the linear or branched unsaturated fatty acids, or the linear or branched unsaturated fatty alcohols, or the linear or branched or cyclic unsaturated fatty amines, or again the quaternary salts preferentially with linear or branched unsaturated fatty chains, whether or not of vegetal origin.

**6.** A composite composition according to any of the claims 1 to 5 **characterised in that** the mineral or organic fillers or pigments having a surface with at least one hydrophilic site are chosen from among the natural calcium carbonates such as chalk, calcite, marble or any other form of natural calcium carbonate notably originating from processes of recycling, or among precipitated calcium carbonate, the dolomites, the crystalline or amorphous aluminium hydroxides, the natural or synthetic precipitated silicates, calcium sulphate, titanium dioxides, satin white, the wollastonites, huntite, the calcinated clays notably originating from processes of recycling, or starch, or again chosen from among the organophilate mineral or organic particles having undergone a physical or chemical treatment such that they have at least one hydrophilic site.

**7.** A composite composition according to any of the claims 1 to 5 **characterised in that** the mineral or organic fillers or pigments having a surface with at least one organophilic site are chosen from among the talcs, micas, kaolins, whether or not calcinated, zinc oxide, the transparent pigments of iron, the colouring pigments, the polystyrene-based synthetic pigments, the urea-formol resins, carbon black or cellulose fibres and flour, or again chosen from among the hydrophilic mineral or organic particles having undergone a physical or chemical treatment such that they have at least one organophilic site.

**8.** A composite composition according to any of the claims 1 to 7 **characterised in that** they contain 0.1% to 99.9% by dry weight, and preferentially 25% to 95% by dry weight, compared to the total dry weight of the fillers or pigments, of mineral or organic fillers or pigments having a surface with at least one hydrophilic site and 99.9% to 0.1% by dry weight, and preferentially between 75% and 5% by dry weight, compared to the total dry weight of the fillers or pigments, of mineral or
organic fillers or pigments having a surface with at least one organophilic site.

**9.** A composite composition according to any of the claims 1 to 8 **characterised in that** it contains 0.01% to 10% and preferentially 0.1 % to 1.5% by dry weight of binding agent, compared to the total dry weight of the fillers or pigments.

**10.** A composite composition according to any of the claims 1 to 9 **characterised in that** it is macroscopically homogenous.

**11.** A composite composition according to any of the claims 1 to 9 **characterised in that** its yield stress determined by the measurement of the Stress Tech® viscoelasticimeter is greater, and preferentially at least four times greater, than the simple corresponding blend of fillers or pigments.

**12.** Use of the composite composition is according to any of the claims 1 to 11 for the manufacture of water-based suspensions of mineral or organic fillers or pigments, paper coatings and/or paper manufacturing, for the mass and/or for any other paper surface treatment.

**13.** Use of the composite compositions according to any of the claims 1 to 11 in the field of paints.

**14.** Use of the composite compositions according to any of the claims 1 to 11 in the field of plastics.

**15.** A water-based suspension of mineral or organic fillers or pigments **characterised in that** it contains a composite composition according to any of the claims 1 to 11.

**16.** A water-based suspension of mineral or organic fillers or pigments according to claim 15 **characterised in that** it is macroscopically homogenous.

**17.** A water-based suspension of mineral or organic fillers or pigments according to claim 15 **characterised in that** its yield stress determined by the measurement of the Stress Tech® viscoelasticimeter is greater, and preferentially at least four times greater, than the simple corresponding blend of fillers or pigments.

**18.** A paper coating **characterised in that** it contains a composite composition according to any of the claims 1 to 11.

**19.** A paper coating according to claim 18 **characterised in that** it is macroscopically homogenous.

**20.** A paper coating according to claim 18 **characterised in that** its yield stress determined by the measurement of the Stress Tech@ viscoelasticimeter is greater, and preferentially at least four times greater, than the simple corresponding blend of fillers or pigments.

**21.** A paper coating according to any of the claims 18 to 20 **characterised in that** it has a light diffusion coefficient S greater than that of a paper coating containing the simple suspensions of the corresponding blends.

**22.** A paper coating according to any of the claims 18 to 20 **characterised in that** it has a whiteness, determined according to the TAPPI T452 ISO 2470 norm, higher than that of a paper coating containing the simple suspensions of the corresponding blends.

**23.** A paper coating according to any of the claims 18 to 20 **characterised in that** it has a brightness, TAPPI 75° according to Lehmann, higher than that of a paper coating containing the simple suspensions of the corresponding blends.

**24.** A paper coating according to any of the claims 18 to 20 **characterised in that** its graph, determined according to the ISIT printability test and representative of the delamination force as a function of time, has rising and descending inclinations which are more shallow than paper coatings containing the simple suspensions of the corresponding blends and a higher maximum value of delamination force.

**25.** A paper coating according to any of the claims 18 to 20 **characterised in that** it has a printing density greater than that of a paper coating containing the simple suspensions of the corresponding blends.

**26.** A composition for surface treatment of paper, wood, metal, plastic or cement or water-based or non-water-based paint formulation **characterised in that** it contains a composite composition according to any of the claims 1 to 11.

**27.** A composition for surface treatment of paper, wood, metal, plastic or cement or water-based or non-water-based paint formulation according to claim 26 **characterised in that** it is macroscopically homogenous.

**28.** A composition for surface treatment of paper according to claim 26 **characterised in that** its yield stress determined by the measurement of the Stress Tech@ viscoelasticimeter is greater, and preferentially at least four times greater, than the simple corresponding blend of fillers or pigments.

**29.** A water-based or non-water-based paint formulation according to claim 26 **characterised in that** it has a light diffusion coefficient S greater than that of a paper coating containing the simple suspensions of the corresponding blends.

**30.** A composition for surface treatment of paper according to any of the claims 26 to 28 **characterised in that** its graph determined according to the ISIT printability test and representative of the delamination force as a function of time, has rising and descending inclinations which are more shallow than paper coatings containing the simple suspensions of the corresponding blends and a higher maximum value of delamination force.

**31.** An uncoated mass filler composition **characterised in that** it contains a composite composition according to any of the claims 1 to 11.

**32.** A basic paper sheet intended to be coated **characterised in that** it contains the uncoated mass filler composition according to claim 31.

**33.** A paper sheet according to claim 32 **characterised in that** it has an opacity determined according to DIN 53146 higher than that of a paper sheet containing the simple suspensions of the corresponding blends.

**34.** A paper sheet according to claim 32 **characterised in that** it has a whiteness, determined according to the TAPPI T452 ISO 2470 norm, higher than that of a paper sheet containing the simple suspensions of the corresponding blends.

## Patentansprüche

1. Verbundverbindung aus mineralischen oder organischen Füllstoffen oder Pigmenten, **dadurch gekennzeichnet, dass** sie folgende Stoffe enthält:

   a) mindestens zwei mineralische oder organische Füllstoffe oder Pigmente, wovon mindestens eines eine Oberfläche mit mindestens einer hydrophilen Stelle aufweist und wenigstens das andere mindestens eine organophile Stelle aufweist,
   b) mindestens ein Bindemittel Aus der Gruppe der Acryl- oder Vinylpolymere und/oder Kopolymere oder Polykondensate oder deren Polyadditionsprodukten wie aus mindestens einem dieser Monomere aufgebaute Polymeren und/oder Kopolymeren in ihrem vollkommen sauren oder teilweise neutralisierten oder ganz neutralisierten Zustand, wie der Acryl- und/oder Methacryl-, Itacon-, Croton-, Fumar-, Maleinanhydridsäure oder auch der Isocroton-, Aconit-, Mesacon-, Sinapin-, Undecylen-, Angelinsäure und/oder deren entsprechenden Estern, der Acrylamidomethylpropan-Sulfonsäure, Acrolein, Acrylamid und/oder Methacrylamid, Methacrylamidopropyl- Trimethyl-AmmoniumChlorid oder -Sulfat, Trimethyl-Ammonium-Ethyl-Chlorid- oder Sulfat-Methacrylat sowie entsprechenden quaternisierten oder nicht quaternisierten Acrylat- und Acrylamid-Verbindungen und/oder Dimethyldiallylchlorid, Vinylpyrrolidon oder auch ein Bindemittel aus der Gruppe der linearen oder verzweigten Fettsäuren bzw. der linearen oder verzweigten Fettalkohole, der unverzweigten oder verzweigten oder zyklischen, gesättigten oder ungesättigten Fettamine oder aber ein Bindemittel aus der Gruppe der quaternären Salze, vorzugsweise mit linearen oder verzweigten Fettketten pflanzlichen Ursprungs oder auch nicht.

   sowie **dadurch**, dass die mineralischen oder organischen Füllstoffe oder Pigmente kostrukturiert oder koabsorbiert sind.

2. Verbundverbindung aus mineralischen oder organischen Füllstoffen oder Pigmenten nach Anspruch 1, **dadurch gekennzeichnet, dass** es sich um eine wässrige Verbindung handelt.

3. Verbundverbindung aus mineralischen oder organischen Füllstoffen oder Pigmenten nach Anspruch 1, **dadurch gekennzeichnet, dass** es sich um eine nichtwässrige Verbindung handelt.

4. Verbundverbindung aus mineralischen oder organischen Füllstoffen oder Pigmenten nach Anspruch 1, **dadurch gekennzeichnet, dass** es sich um eine trockene Verbindung handelt.

5. Verbundverbindung nach einem beliebigen der Ansprüche 1 - 4, **dadurch gekennzeichnet, dass** das Bindemittel aus der Gruppe der Acryl- oder Vinylpolymere und/oder Kopolymere oder Polykondensaten oder deren Polyadditionsprodukten wie Polymeren und/oder Kopolymeren in ihrem vollkommen sauren oder teilweise neutralisierten oder ganz neutralisierten Zustand kommt, die durch Polymerisierung in saurem Zustand in Gegenwart von mindestens einem der mineralischen oder organischen Teilchen der Verbundverbindung sowie ggf. in Gegenwart des Bindemittels nach Anspruch 7 aus mindestens einem der Monomere wie der Acryl- und/oder Methacryl-, Itacon-, Croton-, Fumar-, Maleinanhydridsäure oder auch der Isocroton-, Aconit-, Mesacon-, Sinapin-, Undecylen-, Angelinsäure und/oder deren entsprechenden Estern, der Acrylamido-Methylpropan-Sulfonsäure, Acrolein, Acrylamid und/oder Methacrylamid, Methacrylamido-Propyltrimethyl-AmmoniumChlorid oder -Sulfat, Trimethyl-Ammonium-Ethyl-Chlorid- oder -Sulfat-Methacrylat sowie entsprechenden quaternisierten oder nicht quaternisierten Acrylat- und Acrylamid-Verbindungen und/oder Dimethyldiallylchlorid, Vinylpyrrolidon oder auch wie linearen oder verzweigten ungesättigten Fettsäuren oder linearen oder verzweigten ungesättigten Fettalkoholen, linearen oder verzweigten oder zyklischen ungesättigten Fettaminen oder aber quaternären Salzen, vorzugsweise mit linearen oder verzweigten ungesättigten Fettketten pflanzlichen Ursprungs oder auch nicht gewonnen wird.

6. Verbundverbindung nach einem beliebigen Anspruch 1 - 5, **dadurch gekennzeichnet, dass** der bzw. die mineralischen oder organischen Füllstoffe oder das bzw. die mineralischen oder organischen Pigmente mit einer Oberfläche mit mindestens einer hydrophilen Stelle aus der Gruppe der natürlichen Calciumkarbonate wie Kreide, Calcit, Marmor oder jeder anderen natürlichen Calciumkarbonatform insbesondere aus Recycling-Verfahren, oder aus der Gruppe der ausgefällten Calciumkarbonate wie Dolomit, kristallinen oder amorphen Aluminiumhydroxiden, natürlichen oder künstlich gewonnenen ausgefällten Silikaten, Calciumsulfat, Titandioxyd, Glanzweiß, Wollastaniten, Buntit, geglühten Tonen in erster Linie aus Recycling-Verfahren oder Stärke oder aber aus der Gruppe der mineralischen oder organischen organophilen Teilchen kommen, die physikalisch oder chemisch so aufbereitet wurden, dass sie mindestens eine hydrophile Stelle aufweisen.

**7.** Verbundverbindung nach einem beliebigen Anspruch 1 - 5, **dadurch gekennzeichnet, dass** der bzw. die mineralischen oder organischen Füllstoffe oder das bzw. die mineralischen oder organischen Pigmente mit einer Oberfläche mit mindestens einer organophilen Stelle aus der Gruppe der Talke, Glimmer, geglühten oder ungeglühten Kaoline, Zinkoxide, durchsichtigen Eisenpigmente, Farbpigmente, synthetischen Pigmente aus Polystyrol, Harnstoff-Formol-Harze, Ruß oder Zellulosefasern bzw. -mehl oder aber aus der Gruppe der mineralischen oder organischen hydrophilen Teilchen kommen, die physikalisch oder chemisch so aufbereitet wurden, dass sie mindestens eine organophile Stelle aufweisen.

**8.** Verbundverbindung nach einem beliebigen Anspruch 1 - 7, **dadurch gekennzeichnet, dass** sie 0,1 % - 99,9 % Trockengewicht und vorzugsweise 25 % - 95 % Trockengewicht bezogen auf das gesamte Trockengewicht der Füllstoffe oder Pigmente, der mineralischen oder organischen Füllstoffe oder Pigmente mit einer Oberfläche mit mindestens einer hydrophilen Stelle und 99,9 % - 0,1 % Trockengewicht und vorzugsweise zwischen 75 % und 5 % Trockengewicht bezogen auf das gesamte Trockengewicht der Füllstoffe oder Pigmente bzw. der mineralischen oder organischen Füllstoffe oder Pigmente mit einer Oberfläche mit mindestens einer organophilen Stelle enthält.

**9.** Verbundverbindung nach einem beliebigen Anspruch 1 - 8, **dadurch gekennzeichnet, dass** sie 0,01 % - 10 % Trockengewicht und vorzugsweise 0,1 % - 1,5 % Trockengewicht Bindemittel bezogen auf das gesamte Trockengewicht der Füllstoffe oder Pigmente enthält.

**10.** Verbundverbindung nach einem beliebigen Anspruch 1 - 9, **dadurch gekennzeichnet, dass** sie makroskopisch homogen ist.

**11.** Verbundverbindung nach einem beliebigen Anspruch 1 - 9, **dadurch gekennzeichnet, dass** ihre Fließgrenze, wie sie durch Messung mit dem Viskoelastizitätsmessgerät Stress Tech (c) ermittelt wurde, höher ist und vorzugsweise mindestens viermal höher ist als die des einfachen Gemischs der Füllstoffe oder Pigmente.

**12.** Verwendung der Verbundverbindungen nach einem beliebigen Anspruch 1-11 für die Herstellung wässriger Suspensionen aus mineralischen oder organischen Füllstoffen oder Pigmenten, Papierstreichmassen und/oder die Papierherstellung, die Masse und/oder jede andere Oberflächenbehandlung von Papier.

**13.** Verwendung der Verbundverbindungen nach einem beliebigen Anspruch 1 - 11 im Bereich Lacke und Farben.

**14.** Verwendung der Verbundverbindungen nach einem beliebigen Anspruch 1 - 11 im Bereich Kunststoffe.

**15.** Wässrige Suspension aus mineralischen oder organischen Füllstoffen oder Pigmenten, **dadurch gekennzeichnet, dass** sie eine Verbundverbindung nach einem beliebigen der Ansprüche 1 - 11 enthält.

**16.** Wässrige Suspension aus mineralischen oder organischen Füllstoffen oder Pigmenten nach Anspruch 15, **dadurch gekennzeichnet, dass** sie makroskopisch homogen ist.

**17.** Wässrige Suspension aus mineralischen oder organischen Füllstoffen oder Pigmenten nach Anspruch 15, **dadurch gekennzeichnet, dass** ihre Fließgrenze, wie sie durch Messung mit dem Viskoelastizitätsmessgerät Stress Tech (c) ermittelt wurde, höher ist und vorzugsweise mindestens viermal höher ist als die des einfachen Gemischs der entsprechenden Füllstoffe oder Pigmente.

**18.** Streichmasse, **dadurch gekennzeichnet, dass** sie eine Verbundverbindung nach einem beliebigen der Ansprüche 1 - 11 enthält.

**19.** Papierstreichmasse nach Anspruch 18, **dadurch gekennzeichnet, dass** sie makroskopisch homogen ist.

**20.** Papierstreichmasse nach Anspruch 18, **dadurch gekennzeichnet, dass** ihre Fließgrenze, wie sie durch Messung mit dem Viskoelastizitätsmessgerät Stress Tech (c) ermittelt wird, höher ist und vorzugsweise mindestens viermal höher ist als die des einfachen Gemischs der entsprechenden Füllstoffe oder Pigmente.

**21.** Papierstreichmasse nach einem beliebigen der Ansprüche 18 - 20, **dadurch gekennzeichnet, dass** sie einen höheren Lichtstreuungskoeffizienten S aufweist als eine Streichmasse, die nur die Suspensionen der entsprechenden Gemische enthält.

**22.** Papierstreichmasse nach einem beliebigen der Ansprüche 18 - 20, **dadurch gekennzeichnet, dass** sie einen höheren Weißegrad gemäß Norm TAPPI T452 ISO 2470 aufweist als eine Streichmasse, die nur die Suspensionen der entsprechenden Gemische enthält.

**23.** Papierstreichmasse nach einem beliebigen der Ansprüche 18 - 20, **dadurch gekennzeichnet, dass** sie einen höheren Glanz TAPPI 75* gemäß Lehmann aufweist als eine Streichmasse, die nur die Suspensionen der entsprechenden Gemische enthält.

**24.** Papierstreichmasse nach einem beliebigen der Ansprüche 18 - 20, **dadurch gekennzeichnet, dass** ihre Kennlinie gemäß ISIT-Bedruckbarkeitstest, die für die zeitabhängige Ablösekraft steht, flachere Anstiegs- und Abfallschrägen aufweist als Streichmassen, die nur die Suspensionen aus den entsprechenden Gemischen enthalten, sowie eine höhere maximale Ablösekraft zeigt.

**25.** Papierstreichmasse nach einem beliebigen der Ansprüche 18 - 20, **dadurch gekennzeichnet, dass** sie eine höhere Druckdichte aufweist als eine Streichmasse, die nur die Suspensionen der entsprechenden Gemische enthält.

**26.** Verbindung zur Oberflächenbehandlung von Papier, Holz, Metall, Kunststoff oder Zement oder wässrige bzw. nicht wässrige Lackformulation, **dadurch gekennzeichnet, dass** sie eine Verbundverbindung nach einem beliebigen der Ansprüche 1-11 enthält.

**27.** Verbindung zur Oberflächenbehandlung von Papier, Holz, Metall, Kunststoff oder Zement oder wässrige bzw. nicht wässrige Lackformulation nach Anspruch 26, **dadurch gekennzeichnet, dass** sie makroskopisch homogen ist.

**28.** Verbindung zur Oberflächenbehandlung von Papier nach Anspruch 26, **dadurch gekennzeichnet, dass** ihre Fließgrenze, wie sie durch Messung mit dem Viskoelastizitätsmessgerät Stress Tech (c) ermittelt wurde, höher ist und vorzugsweise mindestens viermal höher ist als die des einfachen Gemischs der entsprechenden Füllstoffe oder Pigmente.

**29.** Wässrige bzw. nicht wässrige Lackformulation nach Anspruch 26, **dadurch gekennzeichnet, dass** sie einen höheren Lichtstreuungskoeffizienten S aufweist als eine Lackformulation, die nur die Suspensionen der entsprechenden Gemische enthält.

**30.** Verbindung zur Oberflächenbehandlung von Papier nach einem beliebigen der Ansprüche 26 - 28, **dadurch gekennzeichnet, dass** ihre Kennlinie gemäß ISIT-Bedruckbarkeitstest, die für die zeitabhängige Ablösekraft steht, flachere Anstiegs- und Abfallschrägen aufweist als Verbindungen zur Oberflächenbehandlung von Papier, die nur die Suspensionen der entsprechenden Gemische enthalten, sowie eine höhere maximale Ablösekraft zeigt.

**31.** Ungestrichene Füllmasseverbindung, **dadurch gekennzeichnet, dass** sie eine Verbundverbindung nach einem beliebigen der Ansprüche 1-11 enthält.

**32.** Für das Bestreichen geeignetes Grundpapierblatt, **dadurch gekennzeichnet, dass** es die ungestrichene Füllmassenverbindung nach Anspruch 31 enthält.

**33.** Papierblatt nach Anspruch 32, **dadurch gekennzeichnet, dass** es eine höhere Opazität gemäß Norm DIN 53146 aufweist als ein Papierblatt, das nur die Suspensionen der entsprechenden Gemische enthält.

**34.** Papierblatt nach Anspruch 32, **dadurch gekennzeichnet, dass** es einen höheren Weißegrad gemäß Norm TAPPI T452 ISO 2470 aufweist als ein Papierblatt, das nur die Suspensionen der entsprechenden Gemische enthält.

FIG. 1/5

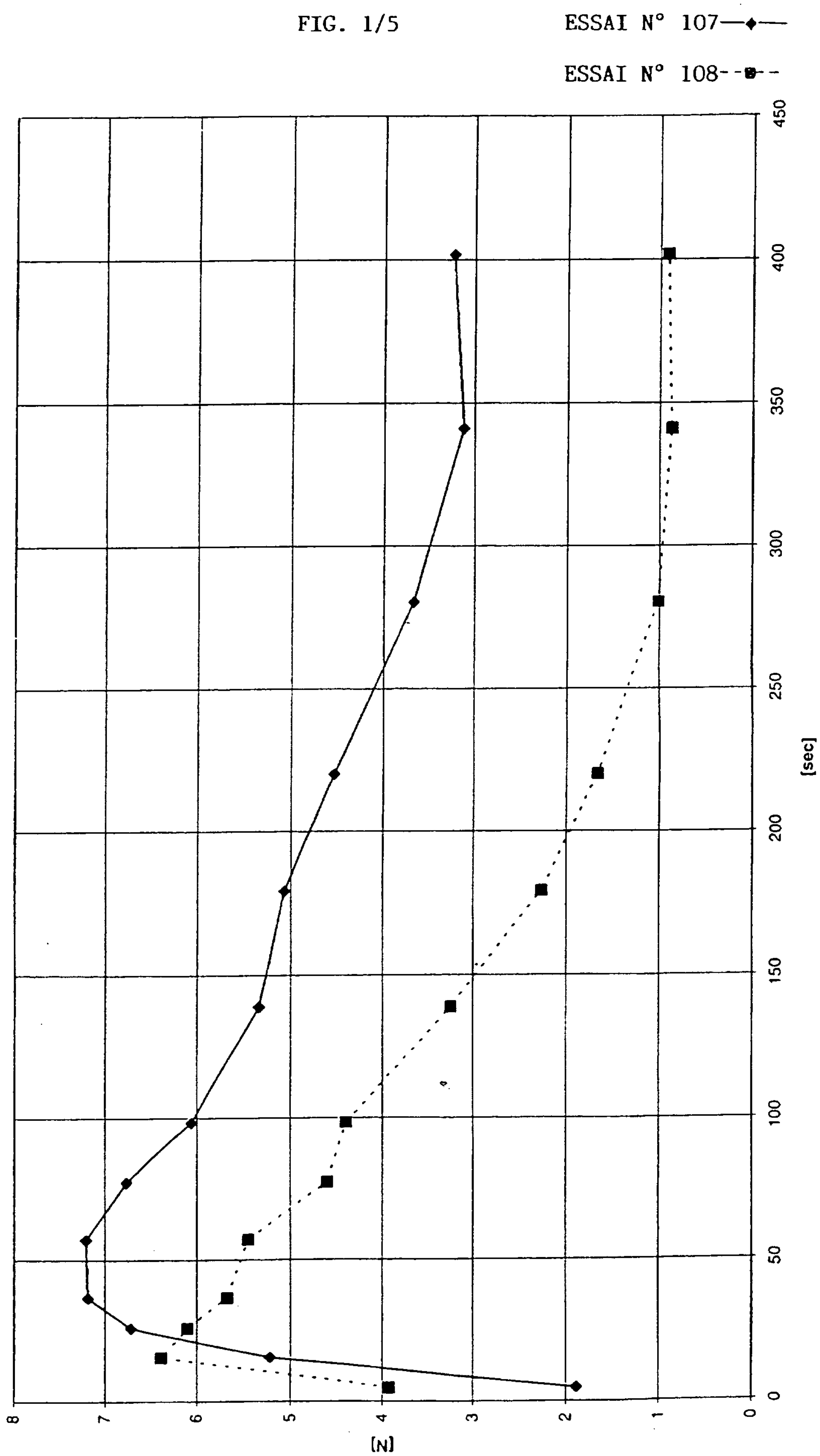
ESSAI N° 107
ESSAI N° 108
[N]
[sec]
0
1
2
3
4
5
6
7
8
50
100
150
200
250
300
350
400
450

FIG. 2/5

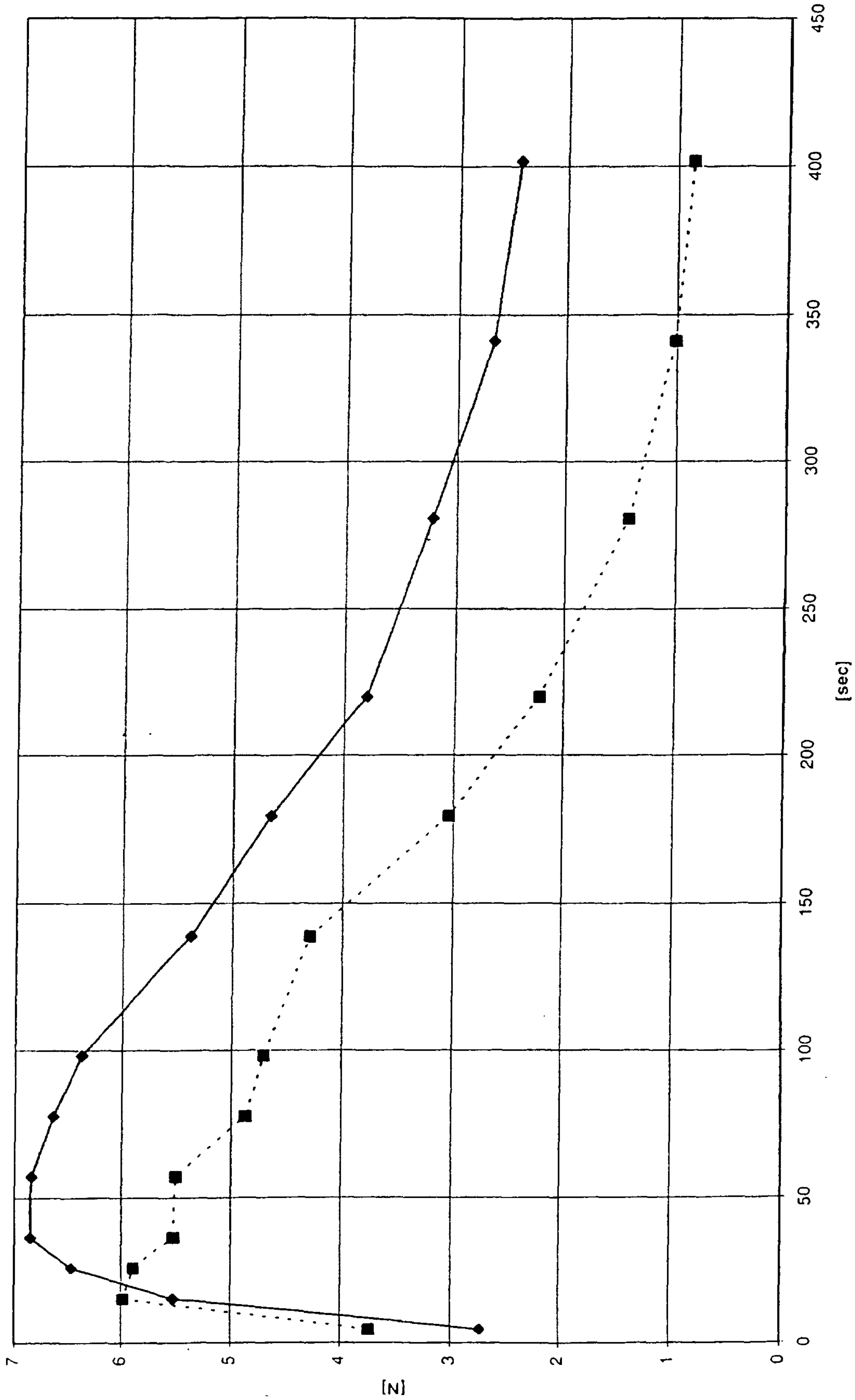
ESSAI N° 109
ESSAI N° 110
[N]
[sec]
0
1
2
3
4
5
6
7
50
100
150
200
250
300
350
400
450

FIG. 3/5

ESSAI N° 111

ESSAI N° 112

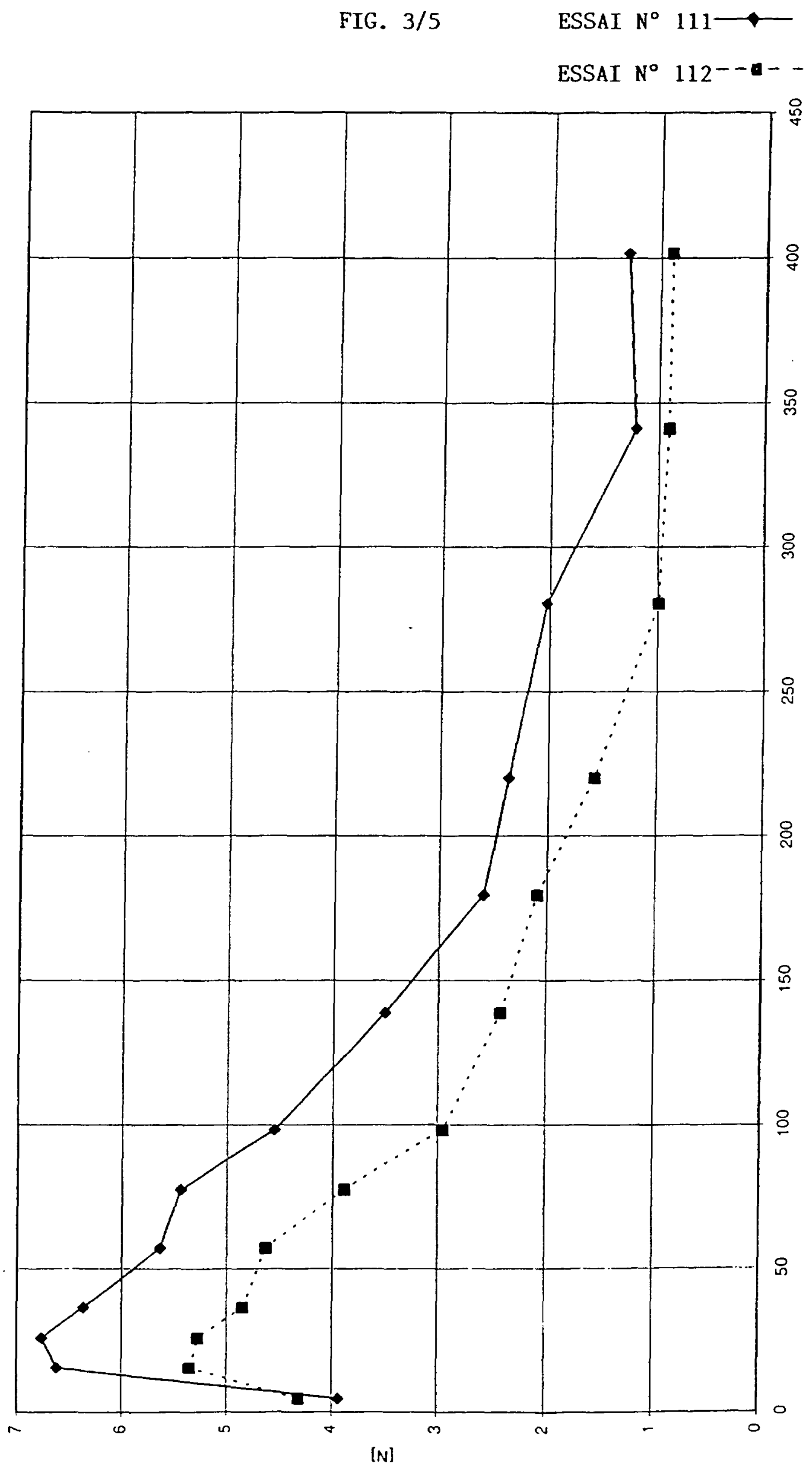

FIG. 4/5

ESSAI N° 113

ESSAI N° 114

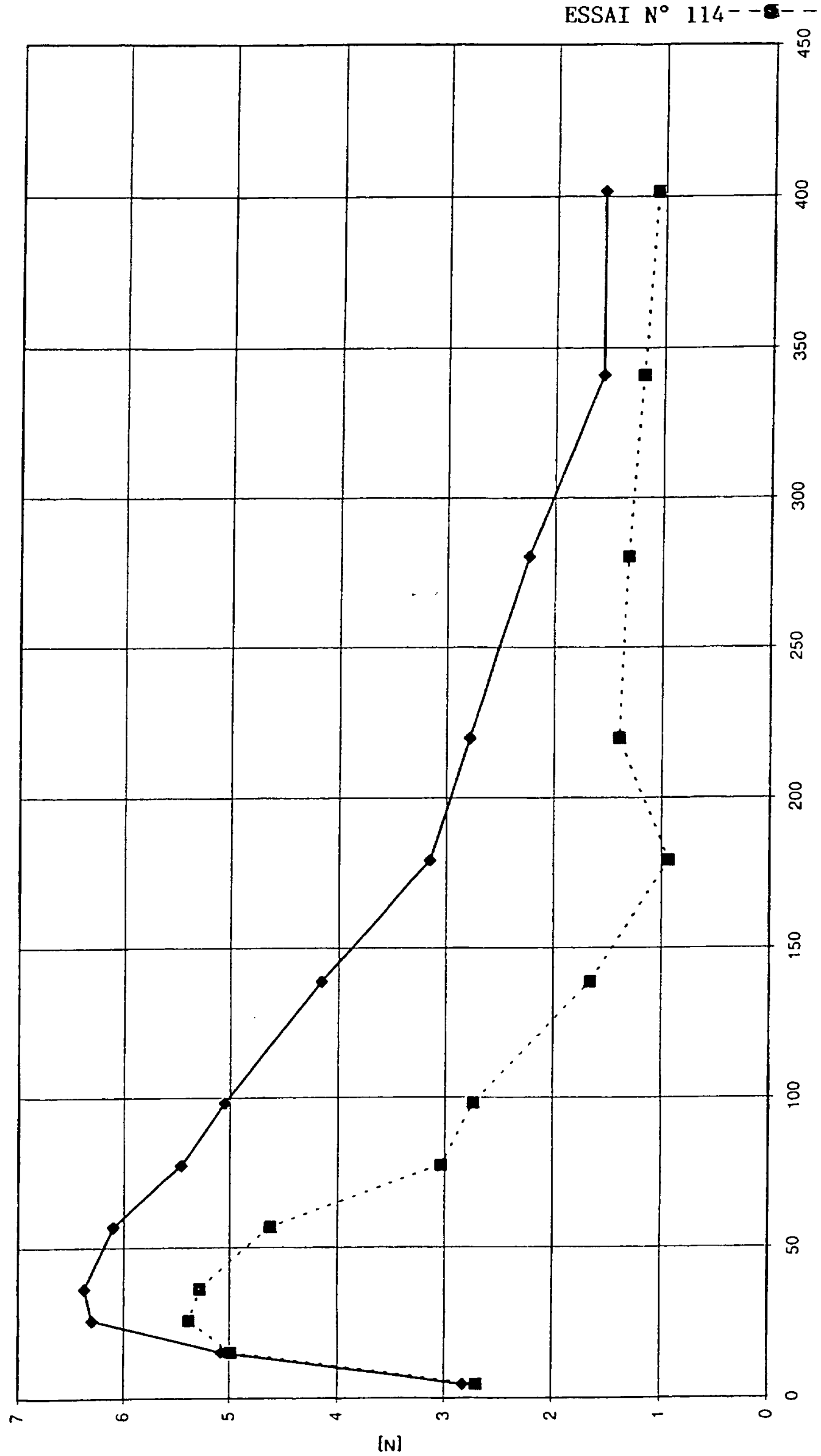

FIG. 5/5

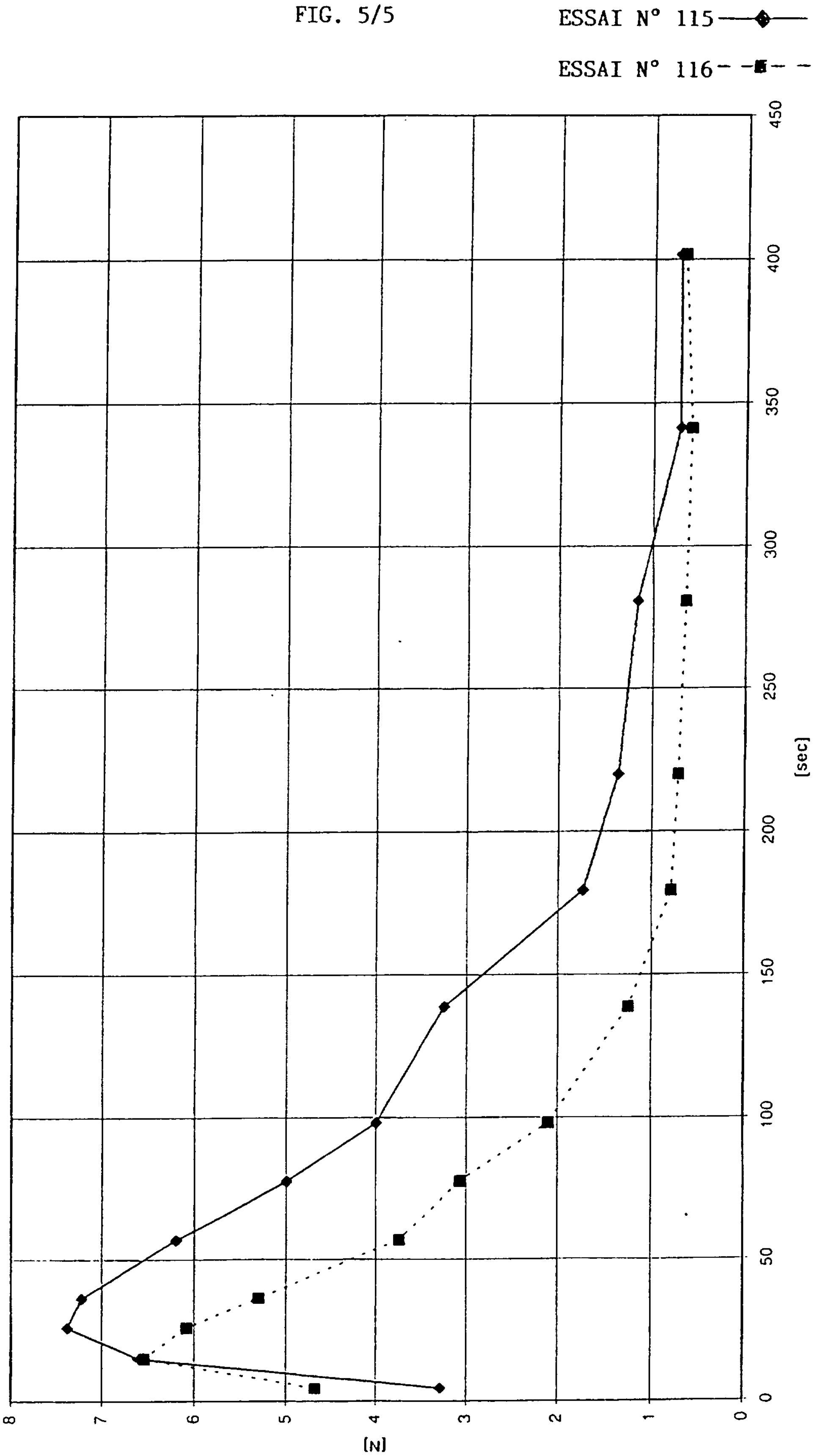
ESSAI N° 115
ESSAI N° 116
0
50
100
150
200
250
300
350
400
450
[sec]
0
1
2
3
4
5
6
7
8
[N]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2526061
- EP 0365502 A
- WO 9208755 A
- US 5449402 A
- US 5454864 A
- US 5344487 A
- EP 0573150 A
- US 4818294 A
- US 5458680 A
- US 4820554 A
- US 4826536 A
- WO 9724406 A
- WO 9732934 A
- EP 0100947 A
- EP 0542643 A
- EP 0542644 A